(19) Europäisches Patentamt
European Patent Office
Office européen des brevets

(11) EP 0 575 561 B1

# (12) EUROPEAN PATENT SPECIFICATION

(45) Date of publication and mention of the grant of the patent:
**11.06.1997 Bulletin 1997/24**

(21) Application number: **92910952.8**

(22) Date of filing: **13.03.1992**

(51) Int Cl.[6]: **F16H 25/06**, F16H 35/02

(86) International application number:
**PCT/US92/02023**

(87) International publication number:
**WO 92/16775 (01.10.1992 Gazette 1992/25)**

## (54) SPEED CONVERTER

GESCHWINDIGKEITSUMFORMGETRIEBE

CONVERTISSEUR DE VITESSE

(84) Designated Contracting States:
**AT BE CH DE DK ES FR GB GR IT LI LU MC NL SE**

(30) Priority: **14.03.1991 US 670263**

(43) Date of publication of application:
**29.12.1993 Bulletin 1993/52**

(73) Proprietor: **SYNKINETICS, INC.**
**Bedford, MA 01730 (US)**

(72) Inventor: **Folino, Frank**
**Weston, MA 02193 (US)**

(74) Representative: **Casey, Lindsay Joseph et al**
**F. R. Kelly & Co.**
**27 Clyde Road**
**Ballsbridge**
**Dublin 4 (IE)**

(56) References cited:
**WO-A-89/07214**

- **Soviet Engineering Research, vol. 6, no. 2, February 1986, Melton Mowbray, Leicestershire, GB; V. Mashinostroeniya: "General information on sinusoidal ball drives", pages 23-26**
- **Patent Abstracts of Japan, vol. 14, no. 583 (M-1064), 26 December 1990; & JP,A, 2253037 (MITSUBA ELECTRIC) 11 October 1990**
- **Patent Abstracts of Japan, vol. 8, no. 262 (M-341)[1699], 30 November 1984; & JP, A, 59133863 (TOSHIBA) 1 August 1984**
- **Patent Abstracts of Japan, vol. 9, no. 290 (M-430)[2013], 16 November 1985; & JP, A, 60129462 (TOSHIBA) 10 July 1985**
- **Patent Abstracts of Japan, vol. 10, no. 21 (M-449)[2078], 28 February 1986; & JP, A, 179563 (SANWA TETSUKI) 13 September 1985**
- **Patent Abstracts of Japan, vol. 9, no. 117 (M-381)[1840], 22 May 1985; & JP, A, 604663 (TOSHIBA) 11 January 1985**
- **Patent Abstracts of Japan, vol. 9, no. 311 (M-436)[2034], 7 December 1985; & JP, A, 60 146954 (SANWA TETSUKI) 2 August 1985**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 575 561 B1

## Description

The present invention relates to mechanical power transmissions, and more particularly, to speed reducers and the like for use between a drive and driven shaft.

Speed conversion is an important capability in the efficient utilization of rotary motive force. The occasion often arises for increasing or reducing of the speed of a drive member to a higher or lower speed at a driven member. In automobiles, for example, a hydraulic transmission, with various combinations of gear assemblies, accomplishes the task of translating the high rotary speed of the gasoline engine to the lower rotational requirements at the driven axle. Typically, such transmissions are quite complex, requiring many parts to operate in sophisticated syncopation, and are quite labor intensive for both assembly and service.

Other speed conversion applications include elevators, where an electric motor typically is employed for lifting and lowering the elevator cab, and robotics, where an electric motor is employed as an actuator to effect motion. These applications often require a zero backlash arrangement so as to be able to achieve a desired level of driven member position control during operation.

Ignatishchev, R.M., 132 Soviet Engineering Research, 6(1986) pp. 23-26, discloses a sinusoidal ball drive mechanism in which the drive and driven cam tracks are conjugate sinusoids. International Patent Application No. WO89/07214 discloses a ball drive transmission that uses a sinusoidal or a single eccentric circle drive cam and sinusoidal or cycloidal driven cams. Each document discloses the features of the preamble of claim 1.

It is therefore an object of the present invention to provide a speed converter which is simplified in nature but is robust in transmission capability.

It is yet another object of the present invention to provide a single stage speed converter which requires few moving parts.

It is still another object of the present invention to provide a single stage speed converter, where a plurality of single stages can be ganged to form a multi-stage speed converter.

It is a further object of the present invention to provide a speed converter having an auto braking feature.

It is another object of the present invention to provide a speed converter with zero backlash.

It is a further object of the present invention to provide a speed converter which is relatively easy to assemble and service.

It is a further object of the present invention to provide an intermittent motion speed converter.

It is an additional object of the present invention to provide a speed converter design which is adaptable to a variety of applications, including automotive transmissions, elevator drives, robotic actuators, and other applications where precise and efficient speed conversion is beneficial.

It is yet an additional object of the present invention to provide optimized load sharing among the multi-elements that transmit the rotary motive force in a speed converter.

It is another object of the present invention to provide multiple output shafts at desired output speeds with one input shaft.

### Summary of the Invention

These and other objects are well met by the presently disclosed, highly efficient, speed converting power transmission assembly of the present invention.

In one aspect, rotary motion is translated from a first to a second angular velocity using a conjugate pair of devices rotatable about a common axis, and with a velocity translation means cooperating with the conjugate pair and located about the common axis.

In one embodiment, a machine (such as a precision positioning device, a robotic actuator or a vehicle, for example) has translating apparatus (such as a transmission in a motor vehicle) for translating angular velocity of a rotary input drive to angular velocity of a rotary output drive. The translating apparatus comprises a conjugate pair of devices rotatable about a common axis and translating means for transmitting an angular velocity of a first of the devices to an angular velocity of a second of the devices. The first device is coupling to an input drive and is for interacting with an input of the translating means and the second of the devices is for coupling to an output drive for reacting with an output of the translating means. The translating means includes a retainer having at least one slot for oscillation of an interacting element in the slot, the retainer being located between the conjugate pair about the common axis, wherein the interacting element couples the first device to the second device. As a result, the angular velocity of the first device is efficiently translated by the translating means into the angular velocity of the second device.

In one embodiment of the invention the conjugate pair of devices includes a drive face cam and a driven face cam rotatable about a common axis. The retainer has at least one radial slot for oscillation of an interacting element in the slot (e.g., a radially slotted reaction disk and a ball riding in the slot), the retainer being located fixed in between the conjugate pair about the common axis. The translating means is for translating motion of the drive cam at a first angular

velocity to motion of the driven cam at a second angular velocity. The drive cam interacts with an input of the translating means (e.g., one side of the ball riding in the slot) and the driven cam reacts with an output of the translating means (e.g., the other side of the ball riding in the slot).

The invention is applicable to an accelerating or decelerating input; and the input and output angular velocities can be equal. Accordingly, for any angular velocity input, the output will rotate at an angular velocity at the converted output speed.

In an embodiment of the invention, the conjugate face cams of the speed converter comprise, firstly, an input disk mounted on an input shaft, wherein the disk has a face that extends radially perpendicular to the shaft. This face contains a grooved cam track forming a face cam track. This face cam track is configured as a drive cam, in simplest form, with one lobe starting at a base circle radius and proceeding rotatably about the center of the disk and shaft at a constantly increasing radius and at a constant angular rotation to a maximum radius at 180°, i.e., in the rise mode, and then proceeding rotatably in the fall mode at a decreasing radius of the same rate and constant angular rotation as in the rise mode back to the original base circle radius, completing 360° of rotation.

Next, the driven cam comprises an output shaft and disk, similar to the disk of the drive cam with a face cam track, and is mounted along the shaft in a position facing the face cam track of the drive cam. The driven face cam contains a plurality of rise and fall modes that are selected to achieve a desired speed conversion, which in this case is in ratio with the single lobe of the drive cam. Each rise and fall mode of the plurality of cycles in the driven cam are configured to have the same radial displacement, for uniform conversion. Alternatively, such radial displacement may be varied for non-uniform conversion.

In another embodiment of the invention, a speed converter includes a drive member having a drive cam and a driven member having a driven cam, a plurality of transmission elements (such as balls) and an immobilized reaction disk having a plurality of slots for respective receipt of the balls, all within a common housing. The invention produces constant velocity for 360 degrees rotation at the output, with torque transmission through each of the transmission elements for 360 degrees of rotation at the output. All of the transmission elements share the load continuously, thereby decreasing the unit load on each transmission element. In one embodiment, there is zero backlash since all of the transmission elements are in contact and under preload, and this assembly has a self-braking feature.

In another aspect of the invention, a method is provided for translating the speed of a drive shaft which is driven at a first speed to the speed of a driven shaft at a second speed. The method includes the steps of providing a drive element having a drive cam, a driven element having a driven cam, and at least one reciprocating transfer element interacting between the two cams in a slotted fixed retainer, whereby the driven cam can be driven at the second speed by the drive cam driven at the first speed.

Preferably means are provided for axially preloading the drive cam. In a particular high torque embodiment, parallel tracks are provided on the drive cam and on the driven cam.

In the above embodiments, the retainer is fixed relative to the conjugate pair. In another embodiment of the invention, the reaction disk is allowed to obtain an angular velocity at a controlled and variable rate, and this in turn provides speed conversion at a controllable and variable rate. In short, by modulating the angular velocity of the reaction disk, a variable speed transmission is provided. As a result, the input supply (e.g., a gasoline engine or electric motor) can operate at its optimum speed, such as in a vehicle, and the speed of travel of the vehicle is then controlled by modulating the speed of the reaction disk. In one embodiment, the reaction disk has a toothed circumference by means of which it is coupled to the toothed output shaft of an electric control motor. The operator simply varies the speed of the control motor to control the speed conversion from the converter input to its output, and thus to control the speed of the vehicle.

In an intermittent motion embodiment of the invention, the ball drive speed reducer takes the form of an intermittent motion drive in which the drive cam, reaction disk and driven cam are still required, although with variation of the drive cam curvature and ball geometry. Thus it is possible to interchange the intermittent motion drive cam for the drive cam of a ball drive speed reducer, so as to convert from the smooth, continuous output of the ball drive to an indexing mode of a smooth intermittent motion drive output. To achieve the intermittent motion, dwell periods are incorporated into the drive cam curvature. Ideally the slope of the curve at any time during the dwell period is zero. With this zero slope, the balls are fixed radially in position in their slots and do not produce the necessary radial displacement of the balls to interact with the reaction disk and the driven cam. Under this condition, the drive cam rotates and the driven cam remains stationary throughout the dwell period. This dwell is accomplished by making the cam curvature in the drive cam a constant radius for the arc length that is equal to the required dwell period. Accordingly, it is possible to design a drive cam capable of intermittent motion and at the same time be interchangeable with the drive cam of the ball speed reducer of the invention.

A constant motion cam can be configured to be interchangeable with an intermittent motion cam, and therefore a speed controller may be provided as a multi-mode device, receiving either continuous or intermittent type cams or having both installed and having means for selecting continuous motion or intermittent motion output, from a continuous motion or intermittent motion input.

Brief Description of the Drawings

These and other features and advantages of the present invention will be more fully understood by reference to the following detailed description in conjunction with the attached drawing in which like reference numerals refer to like elements and in which:

FIGURE 1 is a sectional side view on the centerline of a single stage speed reducer according to an embodiment of the present invention.

FIGURE 2(a) is a sectional view on the centerline of FIGURE 1, showing the top half of the reducer.

FIGURE 2(b) is a sectional view on the centerline of FIGURE 1 showing the top half in further detail.

FIGURE 3(a) is a plan view of a single cycle drive member face cam according to an embodiment of the present invention.

FIGURE 3(b) is a plan view of a twelve cycle driven member face cam according to an embodiment of the present invention.

FIGURE 4 is a conceptual overlay of the single cycle drive member of FIGURE 3(a) and the twelve cycle driven member of FIGURE 3(b).

FIGURE 5(a) is a plan view of a slotted reaction disk with balls installed according to the embodiment of FIGURES 1-4.

FIGURE 5(b) is an overlay plan view of a single cycle drive cam, twelve cycle driven cam and balls and slots of the reaction disk according to an embodiment of the present invention.

FIGURE 6(a) is a partial side sectional view of a multi-stage embodiment of the present invention.

FIGURE 6(b) is a side view of the multi-stage embodiment of FIGURE 6(a).

FIGURE 6(c) is a side view of multi-stage embodiment of FIGURE 6(a) showing preload feature.

FIGURE 6(d) is a side cross-sectional view of a concentric multi-stage embodiment of the invention.

FIGURE 7(a-f) are graphical representations of the interaction of the single stage drive member and the twelve stage driven member of FIGURES 1-5.

FIGURE 8(a) is a superposition of the cam tracks of the drive member and driven member according to FIGURE 7(a-f) interacted by a ball, with the drive cam falling.

FIGURE 8(b) is an enlarged inset of force diagram at ball B2 position of FIGURE 8(a).

FIGURE 8(c) is a section through the cams, reaction disk and balls to show force contact planes of FIGURE 8(a).

FIGURE 8(d) is an enlarged inset of force diagram at ball B9 piston of FIGURE 8(a).

FIGURE 9(a) is a superposition plan view of a two lobe drive cam and twenty cycle driven cam according to an embodiment of the present invention.

FIGURE 9(b) is a plan view of a reaction disk showing ball and slot configuration in practice of the embodiment of FIGURE 9(a).

FIGURE 9(c) is a plan view of a two cycle drive cam according to an embodiment of the present invention.

FIGURE 9(d) is a plan view of a twenty cycle drive cam according to an embodiment of the present invention.

FIGURE 10(a) is a plan view of a three lobe drive cam according to an embodiment of the present invention.

FIGURE 10(b) is a plan view of a four lobe drive cam with a 180° single lobe drive cam superimposed according to an embodiment of the present invention.

FIGURE 11 is a section view of enhanced design of an embodiment of the present invention.

FIGURE 12(a-d) is a sectional side view of an alternative embodiment of the face cams of the present invention using cylindrical cams.

FIGURE 13 is a side view of a multi-stage embodiment of the invention of FIGURE 12.

FIGURE 14 shows an embodiment of the invention having two concentric sets of cams for increasing the amount of balls for greater load-sharing and increased torque capacity.

FIGURE 15 shows an automotive embodiment of the invention where the angular velocity of the retainer disk is controlled by a controller device.

FIGURE 16 shows one cam of an intermittent motion drive embodiment of the invention.

Detailed Description of a Preferred Embodiment

A single-stage embodiment of the present invention is shown in FIGURE 1, 2(a) and 2(b). Speed reducer assembly 10 includes a housing 12(L, R), a plurality of balls 14, a drive member 16 coupled to an input shaft 23, a driven member 18 coupled to an output shaft 25, and a reaction disk 20 coupled to housing 12. The drive member is mounted in housing 12 by means of an input bearing or bushing 22 and the driven member is mounted in housing 12 by means of output bearing or bushing 24. Preferably the drive member and the driven member are each symmetrical about the drive axis A.

Idler bearing 35 provides a rotary structural support for the drive cams and their shafts. This configuration couples

the two shafts into a continuous shaft despite the fact that they are rotating at different speeds. Such an arrangement, as in FIGURE 2(b), maintains shaft alignment and concentricity that sustains the precision performance of the reducer. The idler bearing may be eliminated, as in FIGURE 2(a), by utilizing the cams and balls assembly as a bearing to maintain alignment and concentricity as well as structural shaft continuity. However, this arrangement would increase the ball and cam track loading and must be considered in determining the capacity of such a design.

An alternative embodiment of the invention is to provide preload to the cam and ball assembly. FIGURE 2(b) illustrates, but is not limited to, one such arrangement. A compliant, multi-fingered leaf spring unit 27 applies an axial load to the drive cam 38, which is allowed to slide along the spline, and in turn applies an axial force to the balls against the driven cam 40. The driven cam is prevented from moving axially since its location is fixed to the housing 12, by its locked bearing. This method, or other methods of preloading, will achieve intimate and continuous contact between the cams and balls. This form of intervention will essentially eliminate axial play between the cams and balls and in turn backlash. The preloading essentially will permit tolerances to be relaxed for precision assemblies and eliminate the effect of tolerance accumulation in an assembled stack of such reducers. A further benefit of preloading is the accommodation of any wear in the elements of these units without effecting performance.

In this embodiment, the speed reducing and power transmission capability of assembly 10 is achieved by use of appropriately designed face cams on each of the drive member and driven member. The cams are interacted by the balls. FIGURES 3(a) and 3(b) are examples of two such cams, and are shown by way of illustration and not by way of limitation of the scope of the present invention.

As seen in FIGURE 3(a), drive member 16 includes a single cycle (single lobe) cam 30 which rises from $R_1$ at 0 degrees to $R_2$ at 180 degrees (defining the rise side 32 of the cam) and back to $R_1$ at 360 degrees (defining the fall side 34 of the cam). The cam is asymmetric about the vertical centerline and is generated from $R_1$ to $R_2$ in a prescribed curve relative to the center 50. The cam takes the form of a one cycle ball track 38.

As shown in FIGURE 3(b), driven member 18 is preferably concentric to the shaft. In this embodiment, member 18 includes a 12 cycle (C1-C12) cam 36, taking the form of a concentric 12 cycle ball track 40. Each one of these 12 cycles accommodates the rise and fall of the single cycle drive cam, and each such accommodation rotates the driven member 1/12 of a full revolution of the driven member, in this embodiment.

The cooperation of the two cams of this embodiment is profiled in the overlay of FIGURE 4. Cams 30 and 36, and specifically ball tracks 38, 40, are configured so as to support balls 14, FIGURE 1, between them at locations B1 to BII. The balls are retained in these assigned locations by reaction disk 20, as more particularly shown in FIGURE 5 (a). In this embodiment, the reaction disk is provided with a plurality of radial ball travel slots SI-SII, each slot being placed equidistant, angle $\gamma$, from its nearest neighbors and from the center 50 of the retainer.

The reaction disk of FIGURE 5(a) has several functions. The first is to provide a reaction to the rotary motive forces that are being transmitted through the balls. This function will be described later. The reaction disk is also utilized during the assembly procedure of the speed reducer in that it will locate and retain the balls in their proper orientation and align the cams. Thirdly, at the extreme travel of the balls in slots SI-SII, the balls are assisted in their transition from a rise mode to a fall mode and in reverse.

In operation, the balls 14 translate rotation of input shaft 23 and drive member 16, FIGURE 1, in a given direction (e.g., clockwise, as viewed from the input shaft), to a lower rotation of driven member 18 and output shaft 25 in the same direction. The balls translate in and out radially during rotation of the cams. There is no angular rotation of the balls or the retainer (reaction disk 20) since they are structurally coupled, see pin 33, to the stationary housing 12, FIGURE 2(a). The only rotating elements in the entire assembly are the drive and driven cams.

There are several rules that must be observed for optimal performance of the reducer. First, the number and locations of slots and balls is dependent on the number of lobes in the drive cam and the number of cycles in the driven cam. Second, the angle $\gamma$ separating the ball slots must be greater than the angle $\theta$, subtended by each of the cycles. (In this embodiment, the 12 cycle (C1-C12) cam has an angle $\theta$ equal to 30°, (360/12)). Third, since only one ball can operate on each cycle of the driven cam for a given cycle of the drive cam, the maximum number of balls used must be less than the number of cycles to prevent cam lock (less than 12 balls in this embodiment). The fourth law requires the slots to be oriented according to one fixed position of the two cams relative to each other. The fifth law is that the length of the slots in the reaction disk must accommodate the rise and fall of the drive cam, which is equal to R2-R1 as a minimum. Sixth, in order to optimize load sharing and rotary motion transmission, all balls must simultaneously produce essentially the same angular rotation of the driven cam, at the appropriate speed reduction, for a given angular rotation of the drive cam.

In FIGURE 5(b) cooperation of the cams shown at 0° index point of drive cam 30, C12 of driven cam 36 and slot SII of reaction disk 20. These laws are satisfied by the overlaying the two cam tracks. In this embodiment, a 12 cycle cam having ball track 40 is overlaid over a one lobe drive cam having ball track 38. There are two points of intersection (Z,Y) at each of the 12 cycles of the driven cam ball track 40. The subtended angle of these two points yields one angle $\beta$ less than 30° and the other, $\gamma$, greater. By selecting the greater, slots SI-SII can be located $\gamma$ degrees apart as in FIGURE 5(a). Accordingly, up to 11 balls can be utilized in this cam set. If the drive cam had two lobes, the maximum

number of balls would be 10.

The maximum number of balls and slots is equal to the number of cycles in the driven cam minus the number of lobes in the drive cam. Therefore $\gamma$ is computed as

$$\gamma = \frac{360°}{\text{no. of cycles in driven cam - no. of lobes in drive cam}}$$

In this embodiment,

$$\gamma = \frac{360}{12\text{-}1} = 32.7272°$$

The number of balls for a given speed reducer is a function of the number of cycles in the two cams and the resulting number of slots in the reaction disk design. Ideally, a ball in each slot would be optimal, however an assembly will work with a minimum of two balls in the slots provided they are at a discrete angle apart from each other. It is possible that two balls, at inappropriate angles, may be ineffective in transmitting the rotary motive force through the reducer if they are located at the maximum and minimum points, such as at BII and B5 in FIGURE 5(b). In such case, a third ball would be necessary to sustain smooth and continuous rotation of the output driven cam. The two balls at these points are in a transition state, and in that instant, they are essentially unable to transmit any effective torque. The two balls will become effective elements immediately beyond those maximum/minimum points, and therefore the third ball will be active during this period. It is obvious that a full complement of balls, established by the number of slots, is optimal and has significant impact on the capacity of the reducer as well as their effect in sustaining smooth, continuous, constant rotation with essentially zero backlash.

In the embodiment of FIGURE 5(a), balls B1-B5 are inserted in slots S1-S5 and will react to the fall side 32 of drive cam 30 for a clockwise rotation of the drive cam. Balls B6-B10 are inserted in slots S6-S10 and will react to the rise side 34 of the drive cam, for the same rotation. Ball B11 is inserted on the apex of the 12th cycle C12 of the driven cam 36 and is in the maximum point transition from the rise mode to the fall mode. A minimum point transition will occur when the "0" point of the drive cam reacts with any of the cycles of the driven cam at which time the affected ball will go from the fall mode to the rise mode. These transitions occur at the "0" minimum point and the 180° maximum point, an example of which is shown in FIGURE 5(a). The overlay of FIGURE 5(a) is a snapshot of one instant in the 360° rotation of the drive cam.

The Ball Legend of Table 1 is a compendium of the ball action of the 12:1 speed reducer embodiment of FIGURE 5(b) for 180° rotation (the other 180° of rotation being understood). As can be seen, before rotation starts, ball BII is at a transition maximum point. The instant clockwise rotation of the drive cam starts, balls B1-B5 along with BII are in a fall mode, while balls B6-B10 are in a rise mode. As the drive cam rotates, a transition minimum point occurs at 16.3636 degrees at B5. The fall mode of B5 has been completed and B5 will now start a rise mode. All other balls will continue in the same mode until the next transition point occurs. As can be seen, the transition points alternate as the drive cam rotates, at which time the affected balls change mode. At the maximum transition points, the ball will go from a rise mode to a fall mode while at the minimum transition points the ball will go from a fall mode to a rise mode. The balls meanwhile traverse radially in or out in the slots of the fixed reaction disk. At 180° rotation of the drive cam, ball BII, which was at a maximum transition point at 0° is now at a minimum transition point. Balls B1-B5 which were in a fall mode are now starting a rise mode while balls B6-B10 which started a rise mode at 0°, are now ready to start a fall mode at 180°. All the balls are now in position to reverse their action to accommodate the drive cam rotation from 180° to 360°. The final disposition of ball action at 360° (0°) will reflect the original ball orientation and mode. In the one clockwise revolution (360°) of the drive cam, the driven cam will have rotated 30° in a clockwise direction (12:1 speed ratio).

The rise side 34 and the fall side 32 rotate with the drive cam and ultimately dictate the rise and fall action of the balls. The ball history described above is repeated exactly the same for each revolution of the drive cam. This Ball Legend will be reversed for a counterclockwise rotation of the drive cam.

**TABLE 1:**

**BALL LEGEND**

| Drive Cam Rotation | Driven Cam Rotation | Rising Balls (number) | Falling Balls (number) | Transition Ball |
|---|---|---|---|---|
| 0 | | | | B11 (max. pt.) |
| 0---16.3636 | 0----1.3636 | B6-B10(5) | B1-B5, B11(6) | |
| 16.3636 | | | | B 5 (min. pt.) |
| 16.3636--32.7272 | 1.3636--2.7272 | B5-B10(6) | B1-B4, B11(5) | |
| 32.7272 | | | | B10 (max. pt.) |
| 32.7272--49.0908 | 2.7272--4.0908 | B5--B9(5) | B1-B4, B11, B10(6) | |
| 49.0908 | | | | B 4 (min. pt.) |
| 49.0908--65.4544 | 4.0908--5.4545 | B4--B9(6) | B1-B3, B11, B10(5) | |
| 65.4544 | | | | B 9 (max. pt.) |
| 65.4544--81.8181 | 5.4545--6.8181 | B4--B8(5) | B1-B3, B9-B11(6) | |
| 81.8181 | | | | B 3 (min. pt.) |
| 81.8181--98.1816 | 6.8181--8.1817 | B3--B8(6) | B1,B2,B9-B11(5) | |
| 98.1816 | | | | B 8 (max. pt.) |
| 98.1816--114.5452 | 8.1817--9.5453 | B3--B7(5) | B1,B2,B8-B11(6) | |
| 114.5452 | | | | B 2 (min. pt.) |
| 114.5452--130.9080 | 9.5453--10.9089 | B2--B7(6) | B1, B8-B11(5) | |
| 130.9080 | | | | B 7 (max. pt.) |
| 130.9080--147.2724 | 10.9089--12.2725 | B2--B6(5) | B1, B7-B11(6) | |
| 147.2724 | | | | B 1 (min. pt.) |
| 147.2724--163.6363 | 12.2725--13.6363 | B1--B6(6) | B7-B11(5) | |
| 163.6363 | | | | B 6 (max. pt.) |
| 163.6363--180.0000 | 13.6363--15.000 | B1--B5(5) | B6--B11(6) | |
| 180.0000 | | | | B11 (min. pt.) |

The speed ratio (SR) of speed reducer assembly 10 is determined by comparing the inverse of the number of cycles (W) of the drive cam 30 to the number of cycles (Z) of the driven cam 36, expressed as follows:

$$SR = \frac{1}{W/Z.}$$

Therefore, in the arrangement of FIGS 1-5, the speed ratio is 12:1.

Assembly 10 acts essentially like a bearing. It has extremely high torque capability since all the balls are sharing the loads essentially equally; it has very smooth torque transmission which is constant, without speed or angular variations throughout 360 degrees of rotation of the output; and it is free of vibrations since the ball placement and all components are symmetrical in design and dynamically balanced, rotating concentrically about their common axis of rotation. Ideally, perfect symmetry is achieved when even numbers of cycles are used on the cams. In these cams, masses are perfectly matched 180° apart for the complete 360° of the cam. In the 12:1 reducer, the driven cam with 12 cycles is perfectly balanced since any area on the cam surface will be balanced with an identical area 180° from it.

The one cycle drive cam is asymmetrical about the vertical centerline and therefore not "perfectly" balanced. The unbalance in these cases is of such an insignificant amount that they will appear as a second or third harmonic and will be frequency dependent. These cams are generated in perfect symmetrical disks with cam tracks that are constant in depth, so masses are equal 180° apart. The only variation is the difference in the location of the mass centers 180° part. Since such a small percentage of the cross-section of the disk is removed when machining the track, the change in location of the mass centers will be very small. Furthermore, appropriate design techniques can essentially balance these cams. These include having holes or slots, and if necessary, where possible, having a similar cam track on the opposite face that is 180° out of phase with the working cam track. Finally, since unbalance is most critical at high speeds, this may only be necessary for the drive cam input. Since the balls do not rotate, their masses do not materially affect the dynamic balance of the rotating members.

FIGURES 1-5 illustrate a speed reducer with a drive cam with a single lobe, but a greater number of drive cam lobes is also within the scope of the invention. For example, a four lobe cam combined with the twelve lobe driven cam 36 optimally would have 8 balls (12 cycles minus 4 cycles), and would have a speed ratio of 3:1 (4 cycles drive/12 cycles driven). Hence, it can be seen that by varying the number of cycles on either cams, many combinations of speed ratios are possible. As well, speed increases may be made accordingly.

In an alternative embodiment of the invention, very high speed ratios are obtained by utilizing various numbers of interim cams. This is demonstrated in the illustration of speed reducer assembly 60 in the side view of FIGURE 6(a) and the partial cross-section of FIGURES 6(b) and 6(c). Essentially, assembly 60 is a combination of two of the single stage speed reducer assembly of FIGURE 1. More particularly, speed reducer assembly 60 includes drive member 16, an interim member 64 and driven member 18. Drive member 16 and driven member 18 may be configured as described earlier, including having a respective drive cam 30 with ball track 38 and driven cam 36 with ball track 40. A first face of interim member 64 is provided with a driven cam 66, configured as desired and perhaps such as like cam 36. A second face of interim member 64 is provided with a drive cam 68, configured as desired and perhaps such as like cam 30. This creates a two stage combination of a first paired drive cam and driven cam (first stage) and a second paired drive cam and driven cam (second stage), with balls 14A, 14B and reaction disk 20A, 20B, respectively, interposed between each stage. Hence, each interim cam provides an additional stage of reduction.

The speed reduction (SR) ratio is determined as the inverse of the product of the ratio of the number of cycles (W) on the drive cam compared to the number of cycles (X) on the first face of the interim cam times the ratio of the number of cycles (Y) on the second face of the interim cam compared to the number of cycles (Z) on the driven cam, expressed as follows:

$$SR= \frac{1}{W/X \times Y/Z.}$$

For example, utilizing 12 cycles on the first interim face cam and one cycle on the second interim face cam in combination with the 1/12 speed reducer of FIGURES 1 and 2, yields the assembly shown in FIGURES 6(a,b,c), having a speed reduction ratio of

$$SR = \frac{1}{1/12} \times \frac{1}{1/12} = \frac{1}{1/144} = 144.$$

It is therefore possible to achieve an almost unlimited range of speed reduction in practice of the present invention. For example, with two interim cams with 1:30 speed ratios at each interface, the following speed reduction is possible:

$$SR = \frac{1}{1/30} \times \frac{1}{1/30} \times \frac{1}{1/30} = \frac{1}{1/27,000} = 27,000.$$

Figure 6(c) shows an axial multi-stage embodiment of the invention, while Figure 6(d) shows a concentric multi-stage speed converter. Accordingly, the input shaft is shown in Figure 6(d) as integral with disk 300 which includes drive face cam track 301 of first stage. As shown, the first interim disk 302 has a driven face cam track 303, forming the first stage, and a drive face cam track 304 of the second stage on a larger concentric face cam diameter on the same face as the driven face cam 303 of the first stage. The second interim disk 305, concentric to disk 300, contains driven face cam track 306 of the second stage and has a drive face cam track 307 of the third stage on a larger concentric diameter on the same face as driven face cam track 306 of the second stage. The output disk 308, integral with the output shaft 316, has a driven face cam track 309 of the third stage. Balls 311 interact the first stage;, balls 312 interact the second stage; and balls 313 interact the third stage. Reaction disk 310 contains all the radial slots for the three ball complements 311, 312, and 313.

The machining of the interim cams is not only simple (both cams in the same surface means one machining set-up), but will assure the most precise concentricity of the two cams possible since the machining is done in one set-up. Axial preload is accomplished by spring washer 314 and spring 315 and with the proper spring rates. With such minimal number of parts, production costs are accordingly reduced.

Volumetric efficiency is optimized in the present invention, such that substantial cost effectiveness is possible. This is particularly true when considered in the light of the load sharing aspects of the balls.

Speed reducers using gears transmit torque essentially one gear tooth at a time. Consequently, the only accommodation for gears that can be made to have high torque loads is to increase tooth proportions so that contact stresses are within allowable limits for wear and fatigue life. The speed reducer of this invention utilizes a plurality of balls to transmit the load. The immediate benefit is to distribute the forces essentially equally around 360° of the cams and to significantly reduce highly localized forces and unbalanced loads as is present in gear reducers. For the same magnitude of torque of a gear reducer, the speed reducer of this invention, utilizing a plurality of balls, sharing the load among the balls, results in considerably reduced contact stresses and realizes less wear and longer life. At the same time, use of smaller components in smaller housings for the same transmission of torque is possible. The foregoing also applies to epicyclic drives using eccentric motion devices where perhaps two lobes or teeth may be sharing the load. In such cases, in order to avoid higher than acceptable contact stresses larger components are required.

A further advantage of the invention is the action that transpires during the transmission of torque. Such action is essentially rolling action similar to a ball bearing, whereas there is considerable sliding action in gears and a combination of sliding and rolling action in epicyclic reducers. Sliding is abrasive in nature, and induces surface shear stresses that can accelerate wear life of the components involved. In summary, the speed reducer of this invention offers a smaller operating unit with extreme smoothness and less wear for longer life and better efficiency.

The multi-ball capability of this invention is possible due to the interaction, through the balls, of the two cam configurations that result in a precise, predictable reaction of the balls at each of their locations. The cams must be designed to control the ball displacements in a way that is in concert with the angular velocity of the two cams at any instant of time. Furthermore, these ball displacements will follow radial lines that are equal in length to the cam displacement "D" shown in FIGURE 7(a), and essentially describes the slot parameters in the reaction disk. These radial lines are indeed the loci of the ball centers for the entire engagement of the two cams in both the rise mode, radially out, and the fall mode, radially in.

The ball reactions are independent of each other, as each ball is free to oscillate in its own slot at velocities dictated by the conjugate action of the cams at any instant of time. It is this feature that makes it possible to design many combinations of cams capable of successfully performing in this invention. The cam configurations of the above 12:1 embodiment form a unique pair in that the balls will traverse their slots at essentially the same constant linear velocity. Other conjugate cam pairs will result in balls translating in their slots at variable linear velocities, which is acceptable since the conjugate cam configurations would accommodate the variable velocities at each ball position at any instant of time. In any of the cam pairs above, an equal angular displacement will occur at each ball location for the driven cam which is proportional to the speed reduction and the input angle of the drive cam. Further, the angular velocity of the driven cam will be constant throughout the 360° rotation of the drive cam. These results will be discussed below.

The interaction of these cams and their resultant performance is defined as two cams conjugate with each other in that the drive and driven cams when working together and reacting with the balls perform a specific function to achieve a predictable result. In this embodiment of the invention, the specific function is the equal linear velocity of all the balls for a given angular speed of the drive cam and the predictable result is an equal angular displacement and velocity of the driven cam at each ball location that is proportional to the speed reduction. These conjugate cams are interchangeable providing the ball velocity functions are the same. For the cam pair of FIGURE 7(a) and 7(b), the ball linear velocity is constant and could be replaced, for example, by a two lobe cam whose two rise and fall cycles will interact with the twelve cycle driven cam and produce a constant linear velocity of each ball that is increased by a factor of two. In this case the two lobe drive cam is conjugate with the twelve cycle driven cam and results in a speed reduction of 6:1 (12/2).

The result of these conjugate cams is that acceleration, deceleration and constant speed of the input drive shaft

coupled to the drive cam is faithfully reproduced at the appropriate speed reduction by the driven cam which in turn is coupled to the output shaft.

FIGURES 7(a) and 7(b) show the conjugate cams of the 12:1 embodiment previously described and illustrated in FIGURE 3(a) and 3(b). FIGURE 7(a) graphically develops the single lobe drive cam, 38, FIGURE 3(a), and FIGURE 7(b) graphically develops the 12th cycle of the driven cam 36, FIGURE 3(b). Trigonometric expressions can be used to develop these curves but the graphical presentation illustrates the conjugate action most exactly and at the same time offers a pictorial overview of the mechanism.

In FIGURE 7(a), the fall cycle, 32, of the drive cam is developed for clockwise rotation, and is based on the rise/fall displacement D and the maximum and minimum radii $R_a$ and $R_p$ respectively. The 180°. fall angle is divided into 12 equal angles of 15°, and the rise/fall displacement D is divided into 12 radii of equal incremental increase from $R_a$ to $R_p$. The intersection of these elements shown as points a through p describe the centerline of the fall side of drive cam track, 32. This graphical development could have been accomplished with any number of equal elements of radii and angles, and indeed the more elements involved, the more accurate the curve can be delineated. This fall side of cam track 32 is capable of displacing any number of balls in it an equal increment radially inward, in their slots, for a given angular rotation of the drive cam 16. For this embodiment, a 15° rotation of the drive cam 16, 1/12th the fall angle of 180°, each of the balls in the cam track and their slots will be displaced 1/12th of the rise/fall displacement D. Thus, the fall side 32 (of cam track 16), extending between the maximum radius $R_a$ and the minimum radius $R_p$ from 0° to 180°, is linearly developed and by definition forms a segment of a linear function, namely a linear spiral. For the rise side 180°-360°, 34, Figure 3(a), which is not shown in Figure 7(a), the curve is a mirror image of 32, Figure 7(a), and any balls in its cam track and in their slot, will be radially displaced outward 1/12th of the rise/fall displacement D for the same 15° rotation of the drive cam 16. Accordingly, all balls either on the rise or fall cycle of the cam track, 38, and in their slots will be radially displaced inward or outward an equal increment of the rise/fall displacement D, for a given angular rotation of the drive cam, 16.

FIGURE 7(b) illustrates the graphical development of cycle C12 of the 12 cycle driven cam 18, FIGURE 3(b). For a 12-cycle cam, a subtended angle of 30° (360/12) will be the angle travelled by the driven cam 18, FIGURE 7(b). The C12 cycle is divided into two 15° sectors to accommodate the rise and fall cycle of the drive cam during its 360° rotation. Therefore, the C12 cycle shown for a clockwise rotation has a rise segment 39R and fall segment 39F and are shown as the rise side and fall side, FIGURE 7(b). The two 15° angles are divided into 12 equal angles of 1.25° each. The intersections of these angles with the twelve radii $R_a$ to $R_p$ are noted as points a through $p_2$ on the fall side and a through $p_1$ on the rise side. The curve connecting these points, 36, forms the centerline of the cam track 36, for the C12 cycle. The remaining 11 cycles of the driven cam 18 are developed in the same manner so that each of the 12 cycles have identical fall/rise segments and the fall segment of one cycle is contiguous with the rise segment of its neighboring cycle which in turn is contiguous with the fall segment of its own cycle. This fall/rise cycling continuity is sustained for the remaining cycles to complete the 12 cycle driven cam configuration. Thus the driven cam cycles C1-C12 are also defined by segments of linear functions, namely linear spiral functions, extending between the maximum and minimum radii, $R_a$ and $R_p$ respectively.

Hence, each fall/rise cycle of the driven cam is capable of reacting to one complete revolution of the single lob drive cam of FIGURE 7(a) since it has a single fall/rise cycle for one revolution. This results in a rotation of 30° of the driven cam for 360° rotation of the drive cam. If the drive cam, 16, FIGURE 7(a), were a two lobe design, then for one revolution of the drive cam, two fall/rise cycles of the drive cam will interact with the 12 fall/rise cycles of the driven cam and result in a rotation of two cycles, 60°, of the driven cam and in a 6:1 speed ratio. The fall/rise relationship of the 12 cycles is established by the direction of rotation of the drive cam, and as shown in FIGURE 7(b), a clockwise rotation is assumed. The relationship would reverse for a counter-clockwise rotation of the drive cam.

FIGURE 7(c) and 7(d) are overlays of the two cams as developed in FIGURES 7(a) and 7(b) and illustrate the juxtaposition of ball B11 in slot SII of the reaction disk at the moment of maximum transition of the C12 cycle and point "a" of the maximum radius Ra of the drive cam, FIGURE 7(a). The rise mode of the two cams has been completed and the fall mode, 39F of cycle C12 and 32 of drive cam 38, is set to engage. FIGURE 7(c) describes rotation from 0° to 180° of the drive cam and 0° to 15° of the driven cam. FIGURE 7(d) continues from 180° to 360° and 15° to 30° respectively. For clarity, only the centerlines of the cam track are shown. Also, only 180° of the assembly are shown in each figure.

In FIGURE 7(c), for a clockwise rotation of the drive cam 38, ball BII, which is in direct contact with both cams, will transmit a force from the drive cam 32 to the driven cam 39F and rotate the driven cam also clockwise. (A force analysis is shown in FIGURE 8). The interaction of the conjugate cams will displace the ball radially inward, since both cams are in their fall modes. The radial inward travel is along the line a - $p_{12}$: from the maximum transition point, a, toward the minimum transition point $p_{12}$. The ball translation will be at a constant linear velocity, $V_{B11}$. As the drive cam continues through the 180° of rotation the ball at constant speed continues and arrives at $p_{12}$ which is the minimum transition point shown as p on radius Rp of FIGURE 7(a). The C12 cycle has rotated 15° and shown dotted while the ball, $B_{11}$, centerline is coincident with $p_{12}$. The rise cycle 39R of C1 and the rise cycle 34 of cam 38 are shown dotted and rotated

from the C1(0°) position. Balls B1 thru B5, FIGURE 5(a), will all have started engaged in the fall mode and reacted as outlined in the Ball Legend. Balls B6 through B10 will have started engaged in the rise mode and reacted as outlined in the Ball Legend.

The juxtaposition described at the 180° rotation above is the initial condition for the 180° to 360° rotation FIGURE 7(d). The B11 ball, at the minimum transition point $p_{12}$ is displaced radially outward by the rise cycle 39R of cycle C1. Here again, the interaction of the conjugate cams will translate the ball radially along $p_{12}$-a, to point a, at a constant velocity, $V_{B11}$, until the drive cam has completed the 180° to 360° rotation. The final positions of the C12 cycle, C1 cycle, ball BII and drive cam 38 are shown dotted in their final positions. The drive cam 38 has completed one revolution and is in its original position, cycle C12 has rotated 30° (360/12), and cycle C1 occupies the exact position of C12 at the 0° position. The elements are all in their correct juxtaposition to initiate the next revolution of the drive cam.

In the case of a two lobe drive cam, the interaction described above of course will occur twice for one revolution of the drive cam. The B11 ball velocity will be $2V_{B11}$ since two cycles will be required for one revolution. The 12 cycle driven cam will have rotated 60°. The ball velocity at all locations will be $2V_{B11}$ and translating back and forth in the slots for two cycles. The constant velocity of the driven cam is graphically demonstrated in FIGURES 7(e) and 7(f).

FIGURE 7(e) is an enlarged view of the elements as they are aligned at the 0° index of FIGURE 7(c). The two cams are overlaid and divided as in FIGURE 7(a) and 7(b). The fall side of C12 represented by points $a_o$ through $p'_0$ is set to engage the fall side of cam 38(0°), partially shown as points a, b, c on radii $R_a$, $R_b$ and $R_c$ and also in FIGURE 7(a). The slot S11 of the reaction disk has its radial centerline at the 0° index and is shown as loci a-p. Since the reaction disk does not rotate the slot is fixed in this position.

For clockwise rotation of the drive cam, the cam track 38, as developed in FIGURE 7(a), will displace the ball radially inward at a constant rate within the slot SII. The rate is 1/12 the displacement D per 15°. The ball in turn is engaging the fall side 39F of cycle C12 from $a_0$ to $b_0$, (see enlarged inset, FIGURE 7(e)), and in the process creates a reactive force in the drive cam that creates a moment about the center of rotation. This force will be discussed in FIGURE 8. Rotation continues to where the drive cam 38 has displaced the ball B11 to point $\bar{b}$ along the loci $\bar{a}$-$\bar{p}$, at which time point $b_0$ of cycle C12 and point b of drive cam 38 will also have arrived. The interaction of the ball B11 and fall side 39F of cycle C12 occurs along $a_0$-$b_0$ (see inset FIGURE 7(e)). The portion $\bar{a}$-$\bar{b}$ of the loci $\bar{a}$-$\bar{p}$, is the path of action on which the centerlines of the two cam tracks and the center of the ball are coincident during their interaction for 15° rotation of the drive cam. The driven cam will have rotated 1.25° (15°/12), and is shown dotted in position $a_1$-$p'_1$.

The angular displacement is constant and is illustrated further in the inset FIGURE 7(e). Points $a_0$ and $b_0$ were developed in FIGURE 7(b) and in like manner interim point $i_1$ to $i_5$ are developed in the inset. Equal incremental radii changes are plotted with an equal number of incremental angles $\theta_1$ through $\theta_5$ for the subtended angle of $b_0$, 1.25°. Their intersection results in the incremental points $i_1$ through $i_5$, which indeed are incremental points between $a_0$-$b_0$ of C12. Also shown are arc segments $S_1$ through $S_5$ which are the arc length interim points $i_1$ through $i_5$ travel for the incremental angle $\theta_1$ through $\theta_5$. Therefore, for an incremental displacement, say, $a_i$ to $i_1$, each incremental point $i_1$ through $i_5$ would travel their incremental arc length S1 through S5, which is the incremental angle $\theta_1$ and shows (dotted), the new rotated position $a_i$. This relationship continues for the remaining incremental displacements through $ai_5$-$i_5$ at which time $b_0$ would have arrived at $\bar{b}$ along with b of radius $R_b$ in cam track 38 and the centerline of the ball. It can be seen that by summing up all the infinitesimal increments from $a_0$ to $b_0$ with their corresponding infinitesimal incremental angles in $\theta$, all the engagements would occur on the loci and would reflect a constant angular rotation of the driven cam as a function of the angular rotation of the drive cam. The five dotted positions $a_{i1}$ to $a_{i5}$ illustrates the equal angular positions of C12.

As the drive cam continues its rotation, the ball B11 continues its inward radial travel along the loci $\bar{a}$-$\bar{p}$ and continues its interaction with the fall cycle 39F of cycle C12. FIGURE 7(e) illustrates the sequence of rotation of cycle C12, dotted, as the ball reaches the twelve loci points $\bar{a}$ to $\bar{p}$. The constant angular displacement of 1.25° can be seen for the equal incremental displacements between the loci points $\bar{a}$ through $\bar{p}$. For a 180° rotation of the drive cam all elements are aligned at $\bar{p}$ and the driven cam C12 will have rotated 15° as shown, C12 (15°), in accordance with the speed ratio of 12:1.

FIGURE 7(f) continues the rotation for 180° to 360°. Here, the rise mode 34 (180°) of the drive cam 38 is in contact with the rise mode of cycle C1 (15°) and the ball BII (180°) is at the innermost travel in slot S11. This juxtaposition is exactly the same position of elements at the completion of 180° rotation in FIGURE 7(e). As the drive cam continues its clockwise rotation the rise cycle 34, FIGURE 7(d), will displace the ball BII radially outward along the loci $\bar{p}$-$\bar{a}$ in slot S11 and interact with the rise cycle 39R of cycle C1 (15°). The conjugate cam tracks will repeat the same interaction developed in the fall cycle of FIGURE 7(e) and continues to rotate the driven cam clockwise at a constant angular rotation proportional (12:1) to the drive cam rotation. The sequence of rotation, dotted $a_{12}$ to $a_{24}$, shows the constant 1.25° rotation of C12 from 15° to 30°. When the ball B11 (360°) arrives at $\bar{a}$ the drive cam 38 (360°) would have completed one revolution and the driven cam C12 (30°), 30°. The centerlines of the two cam tracks and ball B11 are all coincident at $\bar{a}$ at this time and the juxtaposition of elements is ready to repeat the next rotation cycle. Accordingly, as the drive cam rotates each revolution the interaction of FIGURES 7(e) and 7(f) will be repeated.

The action described for the ball B11 occurs in synchronization at each of the eleven ball positions. The only difference is that they are either leading or lagging the balls at maximum and minimum transition. FIGURE 5(b) is a snapshot of the balls and shows them at points of the cycle. Balls B1 to B5 are lagging the maximum transition ball B11 and ball B6 is leading balls B7 to B10 toward the minimum transition point. FIGURES 7(e) and 7(f) demonstrate the conjugate cams of this embodiment in which the drive cam displaces all the balls along their loci, radially in or out, an equal amount for a given angle of rotation producing the same linear velocity of the balls and rotating the driven cam an equal angle at all ball positions that is proportional to the speed reduction. For other conjugate cam sets the drive cam action will displace balls unequally but the conjugate action of the two cams will result in rotating the driven cam the same angle at each ball location.

FIGURE 8(a) shows the interaction and forces that occur from the cooperation of the cam ball tracks 38 and 40, the balls, and the reaction disk during the transmission of the rotary motive force from the drive cam 16 to the driven cam 18. The eleven ball positions of this embodiment (12:1) are shown with inset FIGURE 8(b) illustrating the action for the fall side mode 32 and inset FIGURE 8(d) illustrating the action for the rise side mode 34 of the drive cam. Sectional view FIGURE 8(c) shows the ball, reaction disk slot S2 and the two cams 16 and 18. Also shown are the contact planes D and E in each cam, with ball contact points A and B, along with C, the ball contact point in one of the slots of the reaction disk.

For a clockwise rotation of the drive cam 16, at ball position B2, the fall cycle 32 of cam track 38 will establish a force F shown as $F_{B2}$ in magnitude and direction. This force is applied to the ball at contact point A, FIGURES 8(b,c), in the contact plane D. In turn, the force $F_{B2}$ is transmitted to the driven cam 18 by the ball at point B and is shown as $F'_{B2}$ in magnitude and direction and is essentially equal to $F_{B2}$. There is an equal and opposite force $F_{SB2}$ established in the driven cam that reacts $F_{B2}$. These contact points establish the rolling action of the ball. As the drive cam rotates, the conjugate action of the two cams will start the ball rolling inward along a radial straight line. However there is a separation force $F_S$ equal and opposite to the tangential force $F_{TB2}$ that must be accommodated in order that the ball maintain contact with cam track 40 at point B and transmit the tangential force $F_{TB2}$. The magnitude of $F_{TB2}$ is determined vectorially by the normal force $F'_N$ which is perpendicular to the tangent, TAN, FIGURE 8(b), of the cam track 40 at point B. The vector can now be drawn perpendicular to the force $F'_{B2}$ until it intersects the normal $F'_N$. The separation force $F_S$ is equal and opposite to this force $F_{TB2}$, and is reacted by the reaction disk 20 at point C, FIGURES 8(b,c), and on the X flank of slot S2. FIGURE 8(c) shows the slot rotated from its true position only for explaining the action at point C, since the force $F_S$ is perpendicular to the plane of the paper. The force $F_S$, FIGURE 8(b,c) is reacted by $F_R$ which is internal to the reaction disk 20. Since the reaction disk 20 is pinned, and therefore fixed to the housing 20, the separation force $F_S$ will be reacted and the ball will maintain contact with the driven cam 18 throughout the conjugate action of the cams. Accordingly, the tangential force $F_{TB2}$ will transmit the rotary motive force to the driven cam 18 at point B of cam track 40. The conjugate action of the two cams will allow the ball to roll radially inward in a straight line that is parallel to the radial slot of the reaction disk. The angular displacement of the driven cam 18 will proceed in accordance with the speed ratio established by the conjugate cams, which in this embodiment is 12:1, and in the same clockwise rotation of drive cam 16.

For the clockwise rotation of the drive cam, and at the ball position B9, inset FIGURE 8(d), the rise cycle 34 of ball track 38 will establish a force F shown as $F_{B9}$ in magnitude and direction at point A. The ball tracks 38 and 40, and ball B9, cooperate in the same manner as in the case of B2, except the force $F'_{B9}$ is radially outward and contacts the opposite flank of ball track 40 at point B. As shown, resultant tangential force $F_{TB9}$ will be established in the same manner as $F_{TB2}$, and will transmit the rotary motive force to the driven cam at point B. This tangential force $F_{TB9}$ will also apply a clockwise rotation to the driven cam 40 and essentially at the same magnitude as the tangential force at B2. These forces will not change appreciably in magnitude during the rise or fall mode since the tangent angle for the normal force will not change significantly. This can be seen in FIGURE 7 for the 10 positions of the driven cam at the a-$p_{10}$ loci of points. The tangent drawn at each of these points results in TAN angles that are essentially equal.

FIGURE 8(a) illustrates the ten tangential forces $F_{TB1}$ to $F_{TB10}$ that are sharing in the torque that is being transmitted from the drive cam 16 to the driven cam 18. Ball Bll which at this moment is in transition, will participate in load sharing shortly as it comes under the influence of the fall mode 32 of the drive cam track 38. In summing up the horizontal and vertical components of these tangential forces, the results will be very nearly zero, and therefore they will not impose any significant loading on the bearings that support the cams. This is not true in the case of gear and epicyclic speed reducers with eccentric motions. The load sharing aspect of this invention eliminates highly concentrated loads that are eccentric to the axis of rotation and separation forces which must be reacted by the shaft and bearings that support them.

Another feature of this embodiment, is that it is irreversible. The speed reducers of this invention can be designed to be incapable of being driven backward, i.e., the normally driven cam would not be able to turn the normally drive cam. This can be seen in FIGURE 8(b) inset. Rotation of driven cam would require ball B2 to move radially in or out in slot S2. This can only happen if enough tangential force were developed at the ball and cam interface at point B. Since this angle is very nearly 90° the tangential force required to rotate the cam is also very nearly zero and consequently there is little or no force available to turn the cam ball track 38 and in turn to drive the drive cam 16. This irreversible feature eliminates the need for brakes since the speed reducer of this embodiment is self-locking and will hold the load attached to the driven output shaft automatically in the stopped position.

FIGURE 9 (a,b,c,d) is an example of how a combination of a two lobe drive cam 90, FIGURE 9(c), and a 20 cycle (C1-C20) driven cam 96, FIGURE 9(d), react. (The speed ratio = 1/2/20 = 10:1; The number of balls = 20 - 2 = 18.) Balls B9 and B18 are in transition; balls B1-B4 are on the rise cycle of the first lobe 92 of drive cam 90; and balls B14-B17 are on the fall cycle of the first lobe 92. Balls B10-B13 are on the rise cycle of the second lobe 94 of cam 90; and balls B5-B8 are on the fall cycle of second lobe 94.

For the twenty lobe driven cam 96, FIGURE 9(d), the subtended angle r for each cycle is 18° (360/20). The ball slot angle β is 20° (360°/20-2). FIGURE 9(c) shows a two lobe cam track 90 with lobe 1, 92, and lobe 2, 94. For the configuration shown in FIGURE 9(a), in cam track 96, cycles C6 and C16 do not contain balls to react with cam track 90 of the drive cam. There is one ball less than the number of cycles in cam 96 for each lobe of the drive cam, 90, (9 balls per lobe). This fulfills the requirement of no more than one ball per cycle. Balls B9 and B18 are in transition. FIGURE 9(b) shows slots S1 to S18 spaced the angle β (20°), in reaction disk 20.

It can be seen from FIGURE 10(a,b) that as the number of lobes on the drive cam increases, 3 lobes (FIGURE 10(a)), and 4 lobes (FIGURE 10(b)), the rise and fall reflect larger TAN angles. This indicates that some combinations of lobes and cam diameters can produce assemblies of this invention that can be backdriven. The TAN angle must be sufficiently large to produce a tangential force that is large enough to overcome the friction and inertia of the drive load (e.g., the motor). In FIGURE 10(b), the four lobe cam has superimposed on it a 180° portion of a one lobe cam to illustrate the significant change possible in angle. Further extrapolation on rise and fall amount, number of lobes and cam diameter will produce the combinations that can achieve reversibility, or assemblies of this invention that can be used as speed increasers.

A further evolution of the invention is shown in FIGURE 11, and is a further refinement of the preload function and shaft support described in the assembly of FIGURE 2(b). The embodiment shown provides two bearings in the reaction disk that will be more effective in the support of the two shafts and more control in the application of preload.

In the case of shaft support bearings 37 and 24, they provide a moment capability to react any moment loading applied to the assembly from the cantilevered output shaft. This eliminates duplex bearings and provides a more precise alignment of the two shafts during operation. Bearings 22 and 35 provide a precise alignment of the input shaft. The alignment of the two shafts is assured by line boring the four bearing bores in the assembled state of the housing. The reaction disk can easily accommodate the imposed loadings since the internal loading will be transmitted to and reacted by pin 33.

Shim 21, along with the loading nut 11, preloads the assembly. The shim can be ground to the proper thickness for the final preload requirement. The shim can be replaced at any time to either change the preload or make up for wear that may have introduced backlash. This preload technique combined with the multiple number of balls sharing the load can essentially reduce all backlash to where it would be unmeasurable.

According to a conjugate pair of face cam tracks of the speed converter described above, it is preferred that all of the balls are intimately in contact with the face cam tracks of the conjugate pair at all times, and the input power to the drive cam is therefore essentially equally shared by each of the balls. This in turn provides a means of applying forces, essentially equal in magnitude, to the driven face cam, and such forces result in component tangential and radial forces that provide essentially equal tangential forces at each ball position to supply rotative power to the driven cam and the output shaft, and which imposes a system of essentially equal radial inward and radial outward forces. The system may be designed such that the radially inward forces are opposed by an equal number of radially outward forces with a net effect of essentially zero radial force applied to the bearings that support the output shaft of the driven cam.

The configuration of the face cam tracks of a conjugate pair of face cams of the speed converter mechanism can be selected to produce a linear constant angular velocity at a converted speed for the driven cam and output shaft for any input angular velocity of the drive cam and input shaft, and this is repeatable for every revolution. The precision and the repeatability of such a conjugate pair of face cams is such that the output shaft and driven cam can be indexed to any angular position and repeated with extreme accuracy for a given angle of rotation of the input shaft and drive cam. The configuration for such a pair of face cam tracks is defined, firstly for the face cam track of the drive cam where

A-- generating point of the cam curvature
C-- radius of curvature at a given rotatable angle
BCR- base circle radius from which the curvature is developed
θ--rotational angle for generating drive cam curvature
β--rotational angle for generating driven cam curvature
D--radial displacement from the BCR
m--number of times D is traversed for one rotation of the drive cam
n--speed conversion factor.

Accordingly, the drive face cam curvature C starting at generating point A on a given BCR and displacement D and proceeds rotatably about the center of the BCR for any angle, where

$$C_1 = BCR + \theta \times \frac{D}{\frac{360}{m}} \Bigg] \quad \theta = 0° \text{ through } \frac{360}{m}$$

and

$$C_1' = (BCR + D) - (\theta - 360/m) \times \frac{D}{\frac{360}{m}} \Bigg] \quad \theta = \frac{360}{m} \text{ through } \frac{360}{m/2}$$

and the curvature $C_1$ & $C_1'$ when computed for angles to 360° will describe the drive face cam curvature for the desired number of lobes.

For the driven face cam curvature, starting at the same generating point on the BCR as on the drive face cam and proceeding angularly about the center of the BCR for any angle β, where:

$$n = \frac{\text{number of lobes (cycles) of the drive face cam}}{\text{number of cycles of the driven face cam}}$$

and

$$C_2 = BCR + \theta \times \frac{D}{\frac{360}{m}} \Bigg] \quad \theta = 0° \text{ through } \frac{360}{m}$$

and

$$C_2' = (BCR + D) - (\theta - 360/m) \times \frac{D}{\frac{360}{m}} \Bigg] \quad \theta = \frac{360}{m} \text{ through } \frac{360}{m/2}$$

and where $\beta = \theta \times n$, the curvature $C_2$ and $C_2'$ when computed for all angles of θ to 360° will describe one cycle of the driven face cam of the angle β at which point the next cycle will be generated starting at A and θ equal to 0° until the required number of cycles have been completed.

For multiple lobe drive (m greater than 2) face cams, an iterative procedure for computing radial displacements will be required for each angle θ of the drive face cam and β of the driven face cam for decreasing values of m. This will result in configuring m/2 lobes on the drive face cam for θ= 0° to 360° and an equal number of cycles on the driven face cam. For example, for 360° rotatable angle θ on a four lobe drive face cam and a 12 cycle driven face cam, four cycles of the driven face cam are configured on the driven face cam and β will be 120° with a speed conversion of 12/4 = 3:1.

Furthermore, where desired, the precision of such conjugate pairs of face cams is achieved by essentially eliminating any backlash by axial preload adjustment for the assemblage of the conjugate face cam pair with the balls positioned between them, resulting in the elimination of all clearances and producing intimate contact between the elements, with zero backlash. This zero backlash can be maintained by means of a preload device such as a spring with the proper spring rate. Such mechanism can very precisely index the output shaft of the driven face cam to any angle and repeat the position very precisely for the same angular input of the drive shaft.

Another embodiment of the present invention is illustrated in FIGURE 12 (a,b,c,d). The design principal of this assembly 190 is the use of cylindrical cam tracks with ball actuation in an axial line parallel to the axis of rotation, instead of the radial ball actuation perpendicular to the axis of rotation in the embodiment earlier presented. The drive member 100 includes a cylindrical barrel cam 102, FIGURE 12(b), which is machined into its external diameter. As in the case of the face cam embodiment, the pitch of the cam is such that for 180° rotation of the drive member, the ball

will move axially in a slot 130 of reaction cylinder 120 at a rate that is proportional to the 180° rotation of the drive member 102. This rotation will axially displace every ball in each of the slots 130 of the reaction cylinder the same amount for each degree of rotation of drive member 102. The multi-cycle driven cam member 110 has an internal cam track 112, FIGURE 12(d), whose curvature for each cycle is developed to produce a straight line loci of points during its interaction with the drive cylindrical cam 100, and balls 114. This straight line loci of points is axial and parallel to the centerline of the shaft. Balls 114 are installed through the loading ports 160. The conjugate action of these cam tracks produces a constant angular rotation at the designed speed reduction from the drive input member 104, to the driven output member 110.

The reaction cylinder 120 performs the same function as the reaction disk of the face cam design. FIGURE 12(c) shows the reaction cylinder with the axial slots 130, and FIGURE 12(a) shows it fixed to the housing 128. A bearing can be installed in the drive member 100 for shaft continuity similar to the way it is installed in the assembly of FIGURE 2(b). In summary, this embodiment will do with cylindrical cams what the face cam design of the earlier invention accomplishes. All the principals developed and described therein are applicable in this embodiment.

In an alternative embodiment of the cylindrical cam design, higher speed ratios are obtained by utilizing various numbers of interim cylindrical cams and shown as assembly 200, FIGURE 13. Essentially, assembly 200 is a combination of two of the single stage reducers of assembly 190, FIGURE 12(a). More particularly, speed reducer assembly 200 includes a drive member 202, an interim member 210, and driven member 220. Drive member 202 and driven member 220 may be configured as described earlier, i.e., members 100 and 110 in FIGURES 12(b) and 12(d), including having a respective drive cam 102 and driven cam 112. A first internal cam of interim member 210 is provided with a driven cam 212, configured as desired and perhaps such as cylindrical cam 112. A second cam 211 which is on interim cam drum outside diameter 210, with a drive cam 214, configured as desired and perhaps such as like cam 102. This creates a two stage combination of a paired drive cam and driven cam (first stage), and a second paired drive cam and driven cam (second stage) with balls 114 interposed between them and rolling in slots 232 of the reaction cylinders 230 and 240. The balls are inserted through loading ports 160. Hence each interim cylindrical cam provides an additional stage of reduction. The speed reduction ratio (SR) is determined in the same manner as in the multi-stage reducers of the face cam invention earlier presented. It is therefore possible to achieve an almost unlimited range of speed reduction in practice of this invention by utilizing multiple stages of these paired cams.

The output shaft 222 of driven member 220 is supported in bearings 224. A second shaft 228, in an alternate design, is shown concentric with output shaft 222, and supported in bearings 226 and 236. The two concentric shafts, 222 and 228, turning at different speeds, are available to transmit rotary motive forces at the same time or independently. With each additional stage, another concentric shaft becomes available so that with several concentric shafts, each turning at appropriate speeds, and with the proper coupling to the drive shaft, this embodiment could be the basis of a new automobile transmission.

In addition to the foregoing, the present invention may include multiple concentric face cam tracks for a conjugate pair of face cams. This will allow for more balls to share in the transmission capability for a given pair of conjugate cams, such that for two conjugate concentric face cam tracks in the drive and driven face cams there will be twice as many balls involved in sharing the load. As well, there can be more than two concentric face cams in the conjugate pair. As long as the speed conversion factor is the same between all sets of interacting conjugate face cam tracks, the radial displacement of each cam track can be either the same or different from each other for each mating pair of conjugate face cams. A multiple track configuration is shown in Figure 14, where tracks 38 and 40 are interacted by balls B1-B11 and tracks 38' and 40' are interacted by balls B12-B22.

In the above embodiments, the retainer is fixed relative to the conjugate pair. In another embodiment of the invention, the reaction disk is allowed to obtain an angular velocity at a controllable and variable rate, and this in turn provides speed conversion at a controllable and variable rate. By modulating the angular velocity of the reaction disk, a variable speed transmission is provided. As a result, the power input to the speed converter (e.g., a gasoline engine or an electric motor) can operate at its optimum speed, such as in a vehicle, and the speed of travel of the vehicle can be governed by modulating the angular velocity of the reaction disk. A motor vehicle 290 is shown in Figure 15 incorporating a speed converter 291 of the invention, wherein the reaction disk 292 has a toothed circumference 293, such as might form a spur gear. By means of gear 293, the reaction disk is coupled to the toothed output shaft 294, such as might form a cooperating spur gear, of a controller 295, such as an electric control motor. The operator simply varies the speed of the controller to control the angular velocity of the reaction disk so as to control the speed conversion from the speed converter's input 296, driven by engine 297, to its output 298 coupled to the vehicle's wheels 299, and thus to control the speed of the vehicle.

According to the above embodiments, for any constant angular velocity input, the output will rotate at a constant angular velocity at the converted output speed, when the retainer is fixed, or will be modulated if the retainer angular velocity is modulated.

In an alternative embodiment of the invention, the ball drive speed reducer takes the form of an intermittent motion drive. In this embodiment, the drive cam, reaction disk and driven cam are still required, although with variation of the

cam curvature in the drive cam, and ball geometry. It is possible to interchange the intermittent motion drive cam for the drive cam of a ball drive speed reducer, so as to convert from the smooth, continuous output of the ball drive to an indexing mode of a smooth intermittent motion drive output.

To achieve the intermittent motion, dwell periods are incorporated into the drive cam curvature. The slope of the curve at any time during the dwell period is zero. With this zero slope, the balls are fixed radially in position in their slots and do not produce the necessary radial displacement of the balls to interact with the reaction disk and the driven cam. Under this condition, the drive cam rotates and the driven cam remains stationary. This dwell is accomplished by making the cam curvature in the drive cam a constant radius for the arc length that is equal to the required dwell period.

It is now possible to design a drive cam capable of intermittent motion and at the same time be interchangeable with the drive cam of the ball speed reducer of this invention. The design of such an intermittent motion cam includes rise and fall cycles along with dwell cycles. Any combination of rise, fall and dwell cycles are possible to achieve any desired intermittent motion. Figure 16 illustrates one of many examples and shows a one cycle intermittent motion drive cam. The curvature includes two rise, two fall and four dwell cycles. Balls and their radial slots are located at 45, 135, 225 and 315. A twelve cycle driven cam can be used that is similar to the driven cam of the ball drive earlier described with displacement D.

The following intermittent motion occurs for a clockwise rotation of the drive cam of Figure 16, which is shown in the 0° position. From 0 to 45° of rotation of the cam the balls at 45 and 135° will experience a rise mode while the balls at 225 and 315° will experience a fall mode. The slopes at each of the curve segments are the same so that radial displacement of the balls does occur and will interact with the reaction disk and driven cam. The radial displacement for 45° of rotation is D/2 and will result in rotating the driven cam 7.5°. The four dwell curvatures are now positioned to engage their respective balls and for the next 45° of rotation to hold the balls in a fixed position and thereby eliminate any radial movement of the balls. With no radial displacement of the balls, the driven cam remains stationary and will dwell through this mode. The ball at 45° has risen from $R_{D/2}$ to $R_{Dmax}$ and is in position to engage the dwell radius at $R_{max}$. Similarly, the ball at 135° has risen from $R_{min}$ to $R_{D/2}$ and is in position to engage the dwell radius at $R_{D/2}$. The balls at 225 and 315° are experiencing fall cycles such that the ball at 225° will fall from $R_{D/2}$ to $R_{Dmin}$ and will be in position to engage the dwell cycle at $R_{Dmin}$, and the ball at 315° will fall from $R_{Dmax}$ to $R_{D/2}$ and is now in position to engage the dwell cycle at $R_{D/2}$. All four balls execute the 45° dwell period simultaneously (rotation from 45 to 95°) and do not disrupt the continuity of the next 45° rotation of the drive cam. Since both the rotation and dwell modes occur for 45° of rotation of the drive cam, they each take the same time to execute. The dwell curvature can be shortened or lengthened to produce shorter or longer time delays. Therefore, the dwell period of the 45° ball for 0 to 45° rotation of the cam will be at dwell radius $R_{Dmax}$; the second dwell period of the 45° ball for 135 to 180° rotation of the cam will be at dwell radius $R_{D/2}$; the third dwell period of the 45° ball for 225 to 270° rotation of the cam will be at dwell radius $R_{Dmin}$; and the fourth dwell period of the 45° ball for 315 to 360° rotation of the cam will be at dwell radius $R_{D/2}$.

In like manner, and in 45° incremental rotation of the drive cam, similar rotations and dwells will occur alternately so that for 360° rotation of the drive cam the driven cam (the output shaft of the intermittent motion drive, will rotate 7.5° and dwell an amount of time equivalent to the 7.5° rotation. There will be four such cycles for the 360° of drive cam rotation, resulting in four 7.5° angular rotations that alternate with four dwell periods. The driven cam would have rotated 30° in an intermittent mode compared to 30° of smooth continuous rotation of the speed reducer of this invention. The radial travel from the base circle radius to the maximum radius is the radial displacement D.

It is practical therefore to convert a ball speed reducer of this invention with its smooth continuous rotation to an intermittent motion drive by interchanging an intermittent drive cam with a displacement D equal to the drive cam of the ball speed reducer with an appropriate number of balls. Of course dedicated intermittent motion drive assemblies can be manufactured as well.

In addition to the foregoing, the modulated-speed convertor discussed above may be applied to the intermittent embodiment of the invention, so as to be able to vary the cycle time.

It will now be appreciated that a speed converter made in accordance with the teachings of the present invention will have a ratio of drive cam(s) to driven cam(s) of other than unity (less than for reduction, more than for increasing). This invention has a multiplicity of applications, including: automotive transmissions, robotics applications, elevation drives, ant the like.

## Claims

1. An apparatus for converting angular velocity and rotary motive force of a drive input (23) to an output angular velocity and rotary motive force of a driven output (25), wherein the input and output are disposed to be coupled together by and to interact via at least one interacting element (14), the apparatus having a conjugate pair of devices cooperating with a retainer device (20), said devices mounted about a common axis, a first device of said conjugate pair having first cam means (16) and a second device of said pair having a second cam means (18),

said retainer device having at least one slot (S1-S11), said slot adapted to receive therein an interacting element (14), said interacting element being put in oscillatory motion in said slot by relative angular rotary motion between said conjugate pair of devices, one said device comprising a drive input and a second of the devices comprising a drive output,

said first cam means cooperating with said retained device and said second cam means for transmitting angular velocity and rotary motive force of said drive input through said interacting element to said driven output for obtaining said angular velocity and rotary motive force at said driven output, the apparatus being characterized by

a flank portion (32, 34) on said first cam means having a feature based on a radius defined as a linear function of the angular rotation of said first cam means, and a flank portion (39F,39R) on said second cam means having a feature based on a radius defined as a linear function of the angular rotation of said second cam means.

**2.** An apparatus as claimed in claim 1 wherein said first linear function is a first linear spiral function and said second linear function is a second linear spiral function.

**3.** An apparatus as claimed in claim 1 or claim 2 wherein the retainer device (20) is fixed or is rotatable in relation to the common axis and wherein a first of the devices comprises a drive face cam (38) and a second of the devices comprises a driven face cam (40).

**4.** An apparatus as claimed in any of claims 1-3 wherein the retainer (20) further has a plurality of slots (S1-S11) having assigned interacting elements (14) in each slot, each slot defining a centreline which is the loci of the contact of the first and second cam means through the assigned interacting element.

**5.** An apparatus as claimed in claim 4 wherein the retainer device slots are radial slots.

**6.** An apparatus as claimed in claim 4 wherein the retainer device (20) comprises a plurality of axially and rotationally fixed radially extending slots (S1-S11) and the interacting elements (14) are balls.

**7.** The apparatus as claimed in any of claims 1-6 wherein said apparatus has an input shaft (23) and an output shaft (25), wherein said devices comprise a first stage having an input and an output, said input shaft being coupled to said input of said first stage and further comprising a second stage having an input and an output, wherein said output of said first stage is coupled to said input of said second stage and said output of said second stage is coupled to said output shaft, said second stage comprising a second conjugate pair of devices and having a corresponding retainer device, for transmitting angular velocity and rotary motive force from said second stage input to said second stage output.

**8.** An apparatus as claimed in any of claims 1-7 wherein a speed ratio (SR) for said apparatus is determined, for said first cam means being a drive cam (38) comprising (W) cycles and said second cam means being a driven cam (40) and comprising (Z) cycles, as follows:

$$SR = \frac{1}{W/Z.}$$

**9.** An apparatus as claimed in claim 8 wherein said driven cam (40) has multiple cycles, one of said cycles subtending an angle $\Theta$, wherein said slots are separated by an angle $\gamma$, and wherein angle $\gamma$ is greater than angle $\Theta$.

**10.** An apparatus as claimed in claim 9 wherein said drive cam means comprises at least one spiral-based drive cycle and wherein a minimum said angle $\gamma$ is computed as:

$$\gamma = \frac{360°}{\textit{(no. of cycles in driven cam-no. of cycles in drive cam)}}$$

**11.** An apparatus as claimed in any of claims 1-10 wherein the drive cam (38) has at least one cycle and the driven cam (40) has a plurality of cycles, and wherein the angle $\gamma$ separating the ball slots must be less than the angle $\Theta$ subtended by each of the drive cam cycles.

**12.** An apparatus as claimed in any of claims 1-11 wherein said first cam means comprises a face cam having a drive cam track (38) and said second cam means comprises a face cam having a driven cam track (40), and further comprising at least one interim cam having a first and a second face, wherein said first face of said interim cam interacts with said face cam of said drive cam means, and said second face of said interim cam interacts with said face cam of said driven cam means.

**13.** An apparatus as claimed in claim 12 wherein said drive cam track comprises (W) cycles, said interim cam first face comprises (Y) cycles, said interim cam second face comprises (X) cycles and said driven cam track comprises (Z) cycles, wherein the speed reduction (SR) ratio for said apparatus is determined according to the following formula:

$$SR = \frac{1}{W/XxY/Z}$$

**14.** An apparatus as claimed in any of claims 1-13 wherein the conjugate pair of devices comprise a drive cam device (30) and a driven cam device (36), said retainer device (20) being located between said conjugate pair about said common axis.

**15.** An apparatus as claimed in claims 1-14 wherein

a flank portion (34, Figs. 7c-d) on said first cam means is defined by a segment of a first linear function and a second flank portion (32, Figs. 7c-d) on said first cam means is defined by a segment of a second linear function, and
a flank portion (39R, Fig. 7b) on said second cam means is defined by a segment of a third linear function and a second flank portion (39 F, Fig. 7b) on said second cam means is defined by a segment of a fourth linear function.

**16.** An apparatus as claimed in claim 15 wherein said first and said second linear functions as a pair are left-handed and right-handed versions of a first linear spiral function, and wherein said third and fourth linear functions as a pair are left-handed and right-handed versions of a second linear spiral function.

**17.** An apparatus as claimed in claim 16 wherein one said cam means comprises a continuous cam having at least one cycle with a rise side flank and a fall side flank.

**18.** An apparatus as claimed in claim 15 wherein said first and said second linear functions as a pair are left-handed and right-handed versions of a first linear spiral function, and wherein said third and fourth linear functions as a pair are left-handed and right-handed versions of a second linear spiral function, and wherein one said cam means comprises a continuous cam having a plurality of cycles, each said cycle defining a rise side flank and a fall side flank, wherein one said flank is defined by one said left-handed version of one said function pair and the other said flank is defined by the right-handed version of said one said function pair.

**19.** An apparatus as claimed in claim 1 wherein said first device of said conjugate pair is an input drive device for supply of angular velocity and rotary motive force to a second device of said pair, said second device being an output driver device for receipt of said angular velocity and rotary motive force from said input drive device, the apparatus being further characterized by

a linear-function drive cam means defined by said first device of said conjugate pair for supply of angular velocity and rotary motive force to said second device having a linear-function driven cam means for receipt of said angular velocity and rotary motive force from said drive cam means, for obtaining said angular velocity and rotary motive force of said output driven device.

**20.** An apparatus as claimed in claim 19 wherein said drive cam means cooperates with said translating means and said driven cam means for transmitting said angular velocity and rotary motive force of said input device substantially equally and simultaneously through all said oscillating in-motion interacting elements.

**Patentansprüche**

**1.** Vorrichtung zum Umsetzen von Winkelgeschwindigkeit und Drehantriebskraft eines Antriebseingangs (23) in eine

Ausgangswinkelgeschwindigkeit und eine Drehantriebskraft eines Abtriebsausgangs (25), wobei der Eingang und der Ausgang so angeordnet sind, daß sie durch wenigstens ein Wechselwirkungselement (14) gekoppelt sind und wechselseitig mit diesem zusammenwirken, wobei die Vorrichtung ein konjugiertes, wechselseitig mit einer Haltevorrichtung (20) zusammenwirkendes Paar Vorrichtungen aufweist, wobei die genannten Vorrichtungen auf einer gemeinsamen Achse montiert sind, wobei eine erste Vorrichtung des genannten konjugierten Paares eine erste Nockenbaugruppe (16) und eine zweite Vorrichtung des genannten Paares eine zweite Nockenbaugruppe (18) aufweist, wobei die genannte Haltevorrichtung wenigstens einen Schlitz (S1-S11) aufweist, wobei der genannte Schlitz ein Wechselwirkungselement (14) in sich aufnimmt, wobei das genannte Wechselwirkungselement durch eine relative Winkeldrehbewegung zwischen dem genannten konjugierten Paar Vorrichtungen in eine Schwingbewegung in dem genannten Schlitz gesetzt wird, wobei eine genannte Vorrichtung einen Antriebseingang und eine zweite Vorrichtung einen Antriebsausgang umfaßt,

wobei die genannte erste Nockenbaugruppe mit der genannten Haltevorrichtung und der genannten zweiten Nockenbaugruppe zusammenwirkt, um Winkelgeschwindigkeit und Drehantriebskraft des genannten Antriebseingangs durch das genannte Zusammenwirkungselement auf den genannten Abtriebsausgang zu übertragen, so daß die genannte Winkelgeschwindigkeit und Drehantriebskraft an dem genannten Abtriebsausgang erhalten wird, wobei die Vorrichtung gekennzeichnet ist durch
einen Flankenteil (32, 34) auf der genannten ersten Nockenbaugruppe mit einem Merkmal, das auf einem Radius basiert, der als lineare Funktion der Winkelrotation der genannten ersten Nockenbaugruppe definiert ist, und wobei ein Flankenteil (39F, 39R) auf der genannten zweiten Nockenbaugruppe ein Merkmal hat, das auf einem Radius basiert, der als lineare Funktion der Winkelrotation der genannten zweiten Nockenbaugruppe definiert ist.

**2.** Vorrichtung nach Anspruch 1, bei der die genannte erste lineare Funktion eine erste lineare Spiralfunktion und die genannte zweite lineare Funktion eine zweite lineare Spiralfunktion ist.

**3.** Vorrichtung nach Anspruch 1 oder Anspruch 2, bei der die Haltevorrichtung (20) feststehend oder in bezug auf die gemeinsame Achse drehbar ist, und wobei eine erste der Vorrichtungen eine Antriebsplankurve (38) und eine zweite der Vorrichtungen eine Abtriebsplankurve (40) umfaßt.

**4.** Vorrichtung nach einem der Ansprüche 1 - 3, bei der die Halterung (20) ferner eine Mehrzahl von Schlitzen (S1-S11) mit zugeordneten Wechselwirkungselementen (14) in jedem Schlitz aufweist, wobei jeder Schlitz eine Mittellinie definiert, die die Kontaktstelle der ersten und zweiten Nockenbaugruppe durch das zugeordnete Wechselwirkungselement ist.

**5.** Vorrichtung nach Anspruch 4, bei der die Haltevorrichtungsschlitze radiale Schlitze sind.

**6.** Vorrichtung nach Anspruch 4, bei der die Haltevorrichtung (20) eine Mehrzahl von axial und rotational fixierten, radial verlaufenden Schlitze (S1-S11) umfaßt und die Wechselwirkungselemente (14) Kugeln sind.

**7.** Vorrichtung nach einem der Ansprüche 1 - 6, bei der die genannte Vorrichtung eine Antriebswelle (23) und eine Abtriebswelle (25) aufweist, wobei die genannten Vorrichtungen eine erste Phase mit einem Eingang und einem Ausgang aufweisen, wobei die genannte Antriebswelle mit dem genannten Eingang der genannten erste Phase gekoppelt ist, und ferner eine zweite Phase mit einem Eingang und einem Ausgang umfaßt, wobei der genannte Ausgang der genannten ersten Phase mit dem genannten Eingang der genannten zweiten Phase und der genannte Ausgang der genannten zweiten Phase mit der genannten Abtriebswelle gekoppelt ist, wobei die genannte zweite Phase ein zweites konjugiertes Paar Vorrichtung umfaßt und eine entsprechende Haltevorrichtung zum Übertragen von Winkelgeschwindigkeit und Drehantriebskraft von dem genannten zweitphasigen Eingang auf den genannten zweitphasigen Ausgang aufweist.

**8.** Vorrichtung nach einem der Ansprüche 1 - 7, bei der ein Geschwindigkeitsverhältnis (SR) für die genannte Vorrichtung, für die genannte erste Nockenbaugruppe als Antriebsnocke (38) mit (W) Zyklen und die genannte zweite Nockenbaugruppe als Abtriebsnocke (40) und mit (Z) Zyklen wie folgt ermittelt wird:

$$SR = \frac{1}{W/Z.}$$

**9.** Vorrichtung nach Anspruch 8, bei der die genannte Abtriebsnocke (40) mehrere Zyklen hat, wobei einer der genannten Zyklen einem Winkel Θ gegenüberliegt, wobei die genannten Schlitze durch einen Winkel ϒ getrennt sind und wobei der Winkel ϒ größer ist als der Winkel Θ.

**10.** Vorrichtung nach Anspruch 9, bei der die genannte Antriebsnockenbaugruppe wenigstens einen Antriebszyklus auf Spiralbasis umfaßt und wobei ein minimaler genannter Winkel ϒ wie folgt errechnet wird:

$$\Upsilon = \frac{360°}{\textit{(Anz. Zyk. in Abtriebsnocke-Anz. Zyk. in Antriebsnocke)}}$$

**11.** Vorrichtung nach einem der Ansprüche 1 - 10, bei der die Antriebsnocke (38) wenigstens einen Zyklus und die Abtriebsnocke (40) eine Mehrzahl von Zyklen hat, und wobei der die Kugelschlitze trennende Winkel ϒ kleiner sein muß als der Winkel Θ, dem jeder der Antriebsnockenzyklen gegenüberliegt.

**12.** Vorrichtung nach einem der Ansprüche 1 - 11, bei der die genannte erste Nockenbaugruppe eine Plankurve mit einer Antriebsnockenspur (38) und die genannte zweite Nockenbaugruppe eine Plankurve mit einer Abtriebsnokkenkurve (40) umfaßt, und ferner umfassend wenigstens eine Zwischennocke mit einer ersten und einer zweiten Kurve, wobei die genannte erste Kurve der genannten Zwischennocke wechselweise mit der genannten Plankurve der genannten Antriebsnockenbaugruppe zusammenwirkt, und die genannte zweite Kurve der genannten Zwischennocke wechselweise mit der genannten Plankurve der genannten Abtriebsnockenbaugruppe zusammenwirkt.

**13.** Vorrichtung nach Anspruch 12, bei der die genannte Antriebsnockenspur (W) Zyklen, die erste Kurve der genannten Zwischennocke (Y) Zyklen, die zweite Kurve der genannten Zwischennocke (X) Zyklen und die genannte Abtriebsnockenspur (Z) Zyklen umfaßt, wobei das genannte Geschwindigkeitsreduktionsverhältnis (SR) für die genannte Vorrichtung gemäß der folgenden Formel bestimmt wird:

$$SR = \frac{1}{W/X \times Y/Z}$$

**14.** Vorrichtung nach einem der Ansprüche 1 - 13, bei der das konjugierte Paar Vorrichtungen eine Antriebsnockenvorrichtung (30) und eine Abtriebsnockenvorrichtung (36) umfaßt, wobei sich die genannte Haltevorrichtung (20) zwischen dem genannten konjugierten Paar um die genannte gemeinsame Achse befindet.

**15.** Vorrichtung nach Anspruch 1-14, bei der

ein Flankenteil (34, Fig. 7c-d) auf der genannten ersten Nockenbaugruppe durch ein Segment einer ersten linearen Funktion und ein zweiter Flankenteil (32, Fig. 7c-d) auf der genannten ersten Nockenbaugruppe durch ein Segment einer zweiten linearen Funktion definiert wird, und
ein Flankenteil (39R, Fig. 7b) auf der genannten zweiten Nockenbaugruppe durch ein Segment einer dritten linearen Funktion und ein zweiter Flankenteil (39F, Fig. 7b) auf der genannten zweiten Nockenbaugruppe durch ein Segment einer vierten linearen Funktion definiert wird.

**16.** Vorrichtung nach Anspruch 15, bei der die genannte erste und die genannte zweite lineare Funktion als Paar linksgängige und rechtsgängige Versionen einer ersten linearen Spiralfunktion sind, und wobei die genannte dritte und vierte lineare Funktion als Paar linksgängige und rechtsgängige Versionen einer zweiten linearen Spiralfunktion sind.

**17.** Vorrichtung nach Anspruch 16, bei der eine der genannten Nockenbaugruppen eine fortlaufende Nocke mit wenigstens einem Zyklus mit einer ansteigenden Seitenflanke und einer abfallenden Seitenflanke umfaßt.

**18.** Vorrichtung nach Anspruch 15, bei der die genannte erste und die genannte zweite lineare Funktion als Paar linksgängige und rechtsgängige Versionen einer ersten linearen Spiralfunktion sind, und wobei die genannte dritte und vierte lineare Funktion als Paar linksgängige und rechtsgängige Versionen einer zweiten linearen Spiralfunktion sind, und wobei eine der genannten Nockenbaugruppen eine fortlaufende Nocke mit einer Mehrzahl von Zyklen umfaßt, wobei jeder der genannten Zyklen eine ansteigende Seitenflanke und eine abfallende Seitenflanke definiert, wobei eine der genannten Flanken durch eine genannte linksgängige Version von einem genannten Funktionspaar und die andere der genannten Flanken durch die rechtsgängige Version des genannten einen Funktionspaares definiert wird.

**19.** Vorrichtung nach Anspruch 1, bei der die genannte erste Vorrichtung des genannten konjugierten Paares eine Eingangsantriebsvorrichtung für die Speisung von Winkelgeschwindigkeit und Drehantriebskraft zu einer zweiten Vorrichtung des genannten Paares ist, wobei die genannte zweite Vorrichtung eine Ausgangstreibervorrichtung für die Aufnahme der genannten Winkelgeschwindigkeit und Drehantriebskraft der genannten Eingangsantriebsvorrichtung ist, wobei die Vorrichtung ferner gekennzeichnet ist durch

eine Linearfunktions-Antriebsnockenbaugruppe, die definiert wird durch die genannte erste Vorrichtung des genannten konjugierten Paares für die Speisung von Winkelgeschwindigkeit und Drehantriebskraft zu der genannten zweiten Vorrichtung mit einer Linearfunktions-Abtriebsnockenbaugruppe für die Aufnahme der genannten Winkelgeschwindigkeit und Drehantriebskraft von der genannten Antriebsnockenbaugruppe, um die genannte Winkelgeschwindigkeit und Drehantriebskraft der genannten Ausgangsabtriebsvorrichtung zu erhalten.

**20.** Vorrichtung nach Anspruch 19, bei der die genannte Antriebsnockenbaugruppe mit dem genannten Umsetzungsmittel und der genannten Abtriebsnockenbaugruppe zusammenwirkt, um die genannte Winkelgeschwindigkeit und Drehantriebskraft der genannten Eingangsvorrichtung im wesentlichen gleichmäßig und gleichzeitig durch alle genannten schwingenden, in Bewegung wechselweise aufeinander einwirkenden Elemente zu übertragen.

## Revendications

**1.** Appareil pour convertir une vitesse angulaire et force motrice rotative d'une entrée d'entraînement (23) en une vitesse angulaire et force motrice rotative de sortie d'une sortie entraînée (25), dans lequel l'entrée et la sortie sont disposées pour être couplées ensemble par au moins un élément interagissant (14) et interagir par l'intermédiaire de celui-ci, l'appareil ayant une paire conjuguée de dispositifs coopérant avec un dispositif de retenue (20), lesdits dispositifs étant montés autour d'un axe commun, un premier dispositif de ladite paire conjuguée ayant un premier moyen de came (16) et un deuxième dispositif de ladite paire ayant un deuxième moyen de came (18), ledit dispositif de retenue ayant au moins une fente (S1-S11), ladite fente étant adaptée pour recevoir à l'intérieur un élément interagissant (14), ledit élément interagissant étant mis en mouvement oscillant dans ladite fente par un mouvement rotatif angulaire relatif entre ladite paire conjuguée de dispositifs, un dit dispositif comprenant une entrée d'entraînement et un deuxième des dispositifs comprenant une sortie d'entraînement,

ledit premier moyen de came coopérant avec ledit dispositif de retenue et ledit deuxième moyen de came pour transmettre une vitesse angulaire et force motrice rotative de ladite entrée d'entraînement à travers ledit élément interagissant à ladite sortie entraînée pour obtenir ladite vitesse angulaire et force motrice rotative à ladite sortie entraînée, l'appareil étant caractérisé par

une partie de flanc (32, 34) sur ledit premier moyen de came ayant une caracteristique basée sur un rayon défini comme une fonction linéaire de la rotation angulaire dudit premier moyen de came, et une partie de flanc (39F,39R) sur ledit deuxième moyen de came ayant une caracteristique basée sur un rayon défini comme une fonction linéaire de la rotation angulaire dudit deuxième moyen de came.

**2.** Appareil tel que revendiqué à la revendication 1, dans lequel ladite première fonction linéaire est une première fonction linéaire spirale et ladite deuxième fonction linéaire est une deuxième fonction linéaire spirale.

**3.** Appareil tel que revendiqué à la revendication 1 ou la revendication 2, dans lequel le dispositif de retenue (20) est fixe ou est rotatif par rapport à l'axe commun et dans lequel un premier des dispositifs comprend une came plate d'entraînement (38) et un deuxième des dispositifs comprend une came plate entraînée (40).

**4.** Appareil tel que revendiqué dans l'une quelconque des revendications 1 à 3, dans lequel la retenue (20) a en outre une pluralité de fentes (S1-S11) ayant des éléments interagissants assignés (14) dans chaque fente, chaque fente définissant un axe qui est le lieu de contact des premier et deuxième moyens de came à travers l'élément interagissant assigné.

**5.** Appareil tel que revendiqué à la revendication 4, dans lequel les fentes du dispositif de retenue sont des fentes radiales.

**6.** Appareil tel que revendiqué à la revendication 4, dans lequel le dispositif de retenue (20) comprend une pluralité de fentes s'étendant radialement axialement et rotationnellement fixes (S1-S11) et les éléments interagissants (14) sont des billes.

**7.** Appareil tel que revendiqué dans l'une quelconque des revendications 1 à 6, dans lequel ledit appareil a un arbre d'entrée (23) et un arbre de sortie (25), dans lequel lesdits dispositifs comprennent un premier étage ayant une entrée et une sortie, ledit arbre d'entrée étant couplé à ladite entrée dudit premier étage et comprenant en outre un deuxième étage ayant une entrée et une sortie, dans lequel ladite sortie dudit premier étage est couplée à ladite entrée dudit deuxième étage et ladite sortie dudit deuxième étage est couplée audit arbre de sortie, ledit deuxième étage comprenant une deuxième paire conjuguée de dispositifs et ayant un dispositif de retenue correspondant, pour transmettre une vitesse angulaire et force motrice rotative depuis ladite entrée du deuxième étage à ladite sortie du deuxième étage.

**8.** Appareil tel que revendiqué dans l'une quelconque des revendications 1 à 7, dans lequel un rapport de vitesse (SR) dudit appareil est déterminé, pour ledit premier moyen de came étant une came d'entraînement (38) comprenant (W) cycles et ledit deuxième moyen de came étant une came entraînée (40) et comprenant (Z) cycles, comme suit:

$$SR = \frac{1}{W/Z}$$

**9.** Appareil tel que revendiqué à la revendication 8, dans lequel ladite came entraînée (40) a des cycles multiples, l'un desdits cycles sous-tendant un angle θ, dans lequel lesdites fentes sont séparées par un angle Y, et dans lequel l'angle y est supérieur à l'angle θ.

**10.** Appareil tel que revendiqué à la revendication 9, dans lequel ledit moyen de came d'entraînement comprend au moins un cycle d'entraînement basé sur une spirale et dans lequel un dit angle Y minimum est calculé par:

$$Y = \frac{360°}{\text{(Nb cycles dans came entrainée-Nb cycles dans came d'entraînement)}}$$

**11.** Appareil tel que revendiqué dans l'une quelconque des revendications 1 à 10, dans lequel la came d'entraînement (38) a au moins un cycle et la came entraînée (40) a une pluralité de cycles, et dans lequel l'angle y séparant les fentes à billes doit être inférieur à l'angle θ sous-tendu par chacun des cycles de la came d'entraînement.

**12.** Appareil tel que revendiqué dans l'une quelconque des revendications 1 à 11, dans lequel ledit premier moyen de came comprend une came plate ayant une piste de came d'entraînement (38) et ledit deuxième moyen de came comprend une came plate ayant une piste de came entraînée (40), et comprenant en outre au moins une came intermédiaire ayant un premier et un deuxième plat, dans lequel ledit premier plat de ladite came intermédiaire interagit avec ladite came plate dudit moyen de came d'entraînement, et ledit deuxième plat de ladite came intermédiaire interagit avec ladite came plate dudit moyen de came entraînée.

**13.** Appareil tel que revendiqué à la revendication 12, dans lequel ladite piste de came d'entraînement comprend (W) cycles, ledit premier plat de came intermédiaire comprend (Y) cycles, ledit deuxième plat de came intermédiaire comprend (X) cycles et ladite piste de came entraînée comprend (Z) cycles, dans lequel le rapport de réduction de vitesse (SR) dudit appareil est déterminé conformément à la formule suivante:

$$SR = \frac{1}{W/XxY/Z}$$

**14.** Appareil tel que revendiqué dans l'une quelconque des revendications 1 à 13, dans lequel la paire conjuguée de dispositifs comprend un dispositif de came d'entraînement (30) et un dispositif de came entraînée (36), ledit dispositif de retenue (20) étant situé entre ladite paire conjuguée autour dudit axe commun.

**15.** Appareil tel que revendiqué dans les revendications 1 à 14, dans lequel

une partie de flanc (34, figures 7c-d) sur ledit premier moyen de came est définie par un segment d'une première fonction linéaire et une deuxième partie de flanc (32, figures 7c-d) sur ledit premier moyen de came est définie par un segment d'une deuxième fonction linéaire, et

une partie de flanc (39R, figure 7b) sur ledit deuxième moyen de came est définie par un segment d'une troisième fonction linéaire et une deuxième partie de flanc (39F, figure 7b) sur ledit deuxième moyen de came est définie par un segment d'une quatrième fonction linéaire.

**16.** Appareil tel que revendiqué à la revendication 15, dans lequel lesdites première et deuxième fonctions linéaires en tant que paire sont les versions gauche et droite d'une première fonction linéaire spirale, et dans lequel lesdites troisième et quatrième fonctions linéaires en tant que paire sont les versions gauche et droite d'une deuxième fonction linéaire spirale.

**17.** Appareil tel que revendiqué à la revendication 16, dans lequel un dit moyen de came comprend une came continue ayant au moins un cycle avec un flanc montant et un flanc descendant.

**18.** Appareil tel que revendiqué à la revendication 15, dans lequel lesdites première et deuxième fonctions linéaires en tant que paire sont les versions gauche et droite d'une première fonction linéaire spirale, et dans lequel lesdites troisième et quatrième fonctions linéaires en tant que paire sont les versions gauche et droite d'une deuxième fonction linéaire spirale, et dans lequel un dit moyen de came comprend une came continue ayant une pluralité de cycles, chaque dit cycle définissant un flanc montant et un flanc descendant, dans lequel un dit flanc est défini par une dite version gauche d'une dite paire de fonctions et l'autre dit flanc est défini par la version droite de ladite paire de fonctions.

**19.** Appareil tel que revendiqué à la revendication 1, dans lequel ledit premier dispositif de ladite paire conjuguée est un dispositif d'entraînement d'entrée pour fournir une vitesse angulaire et force motrice rotative à un deuxième dispositif de ladite paire, ledit deuxième dispositif étant un dispositif d'attaque de sortie pour recevoir ladite vitesse angulaire et force motrice rotative dudit dispositif d'entraînement d'entrée, l'appareil étant en outre caractérisé par

un moyen de came d'entraînement de fonction linéaire défini par ledit premier dispositif de ladite paire conjuguée pour fournir une vitesse angulaire et force motrice rotative audit deuxième dispositif ayant un moyen de came entraînée de fonction linéaire pour recevoir ladite vitesse angulaire et force motrice rotative dudit moyen de came d'entraînement, pour l'obtention de ladite vitesse angulaire et force motrice rotative dudit dispositif entraîné de sortie.

**20.** Appareil tel que revendiqué à la revendication 19, dans lequel ledit moyen de came d'entraînement coopère avec ledit moyen de translation et ledit moyen de came entraînée pour transmettre ladite vitesse angulaire et force motrice rotative dudit dispositif d'entrée de manière sensiblement égale et simultanée à travers tous lesdits éléments interagissants en mouvement oscillant.

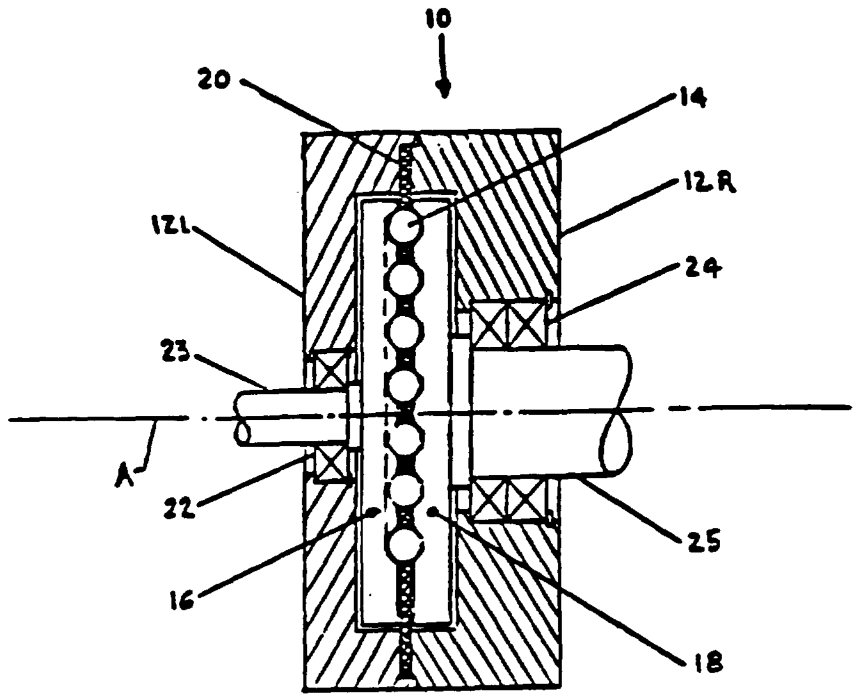


Figure 1

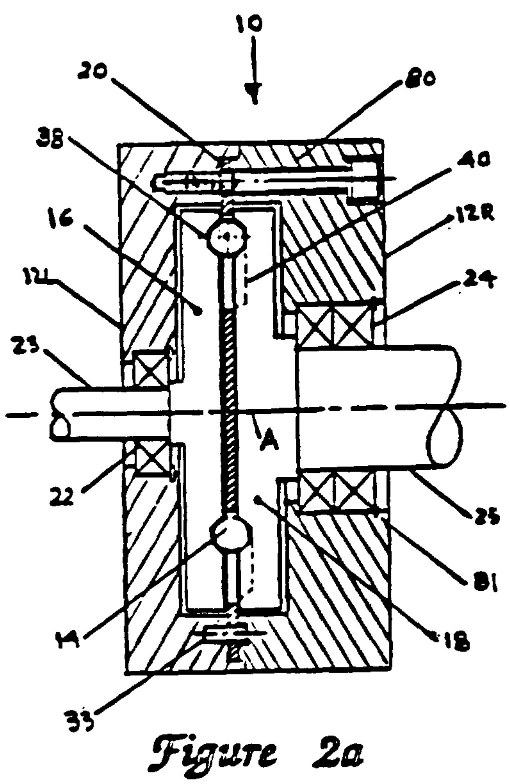


Figure 2a

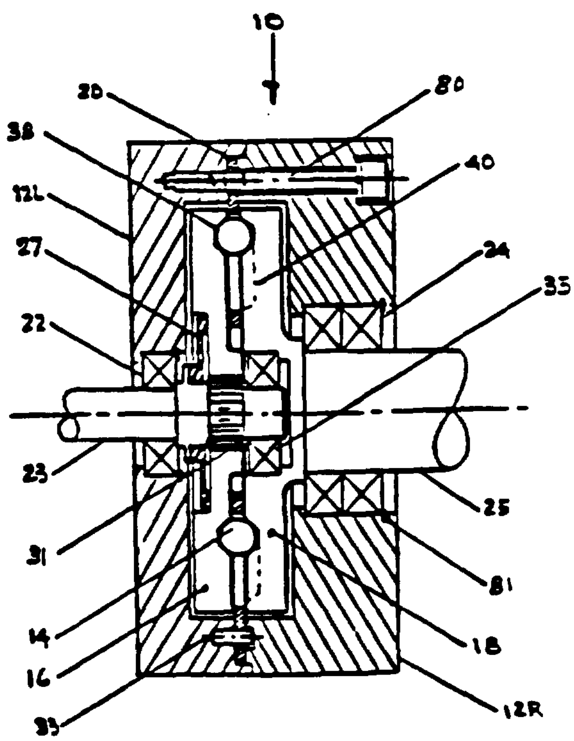


Figure 2b

Figure 3a

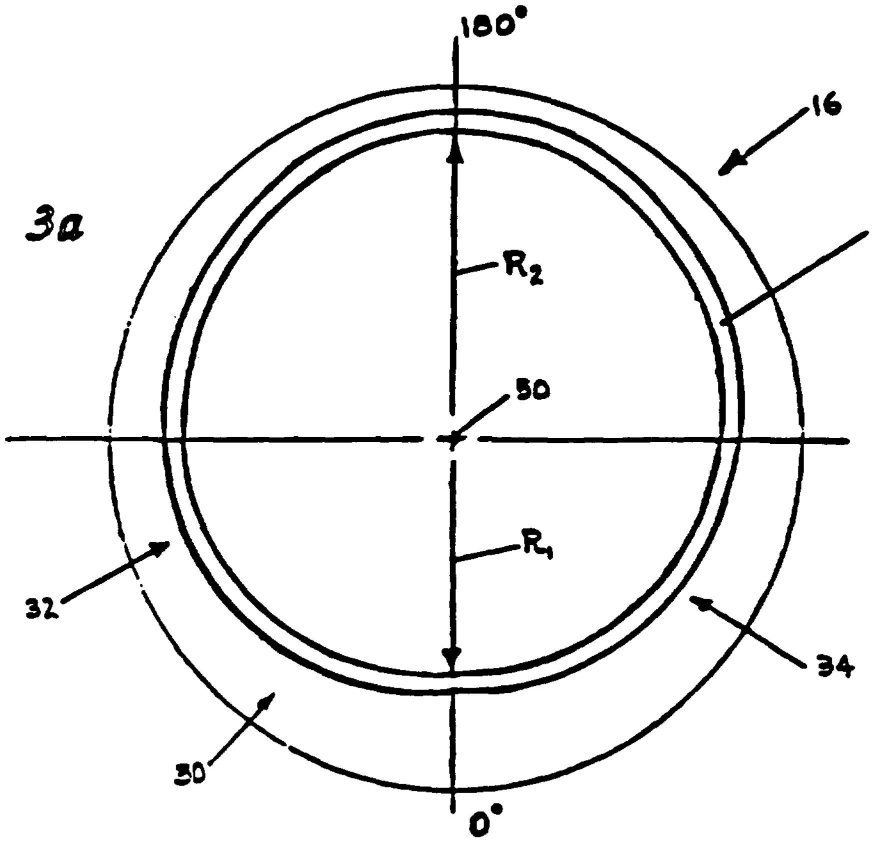


Figure 3b

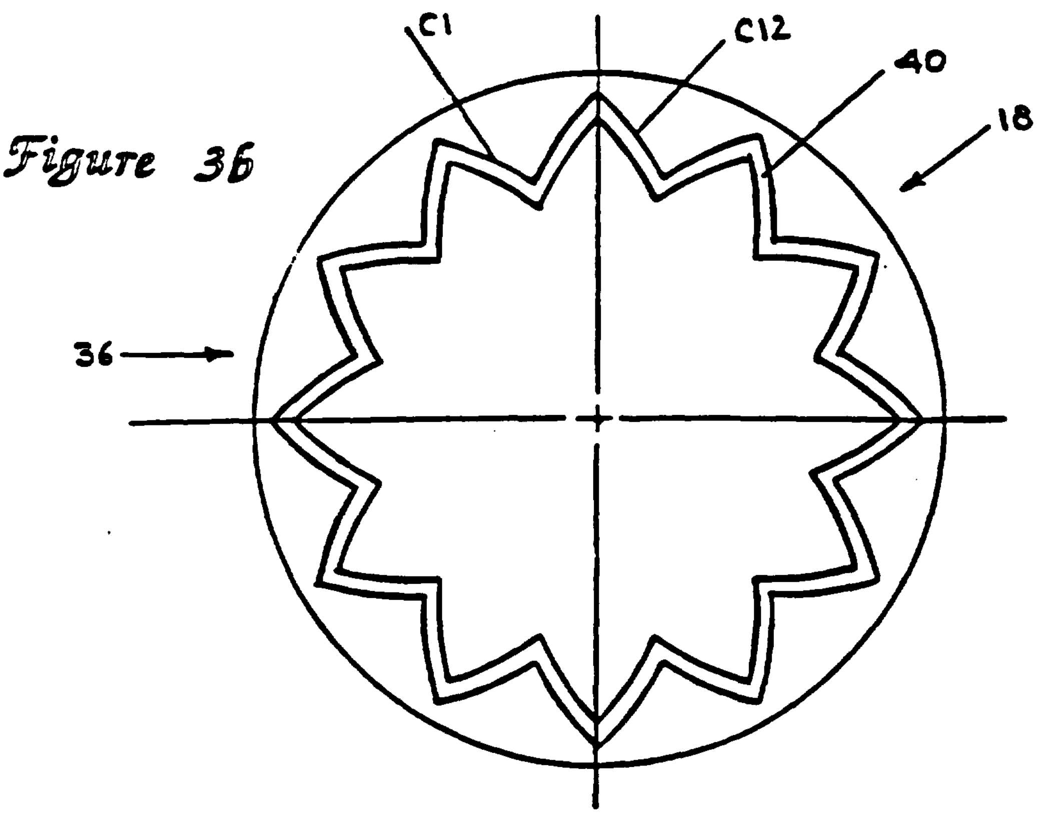

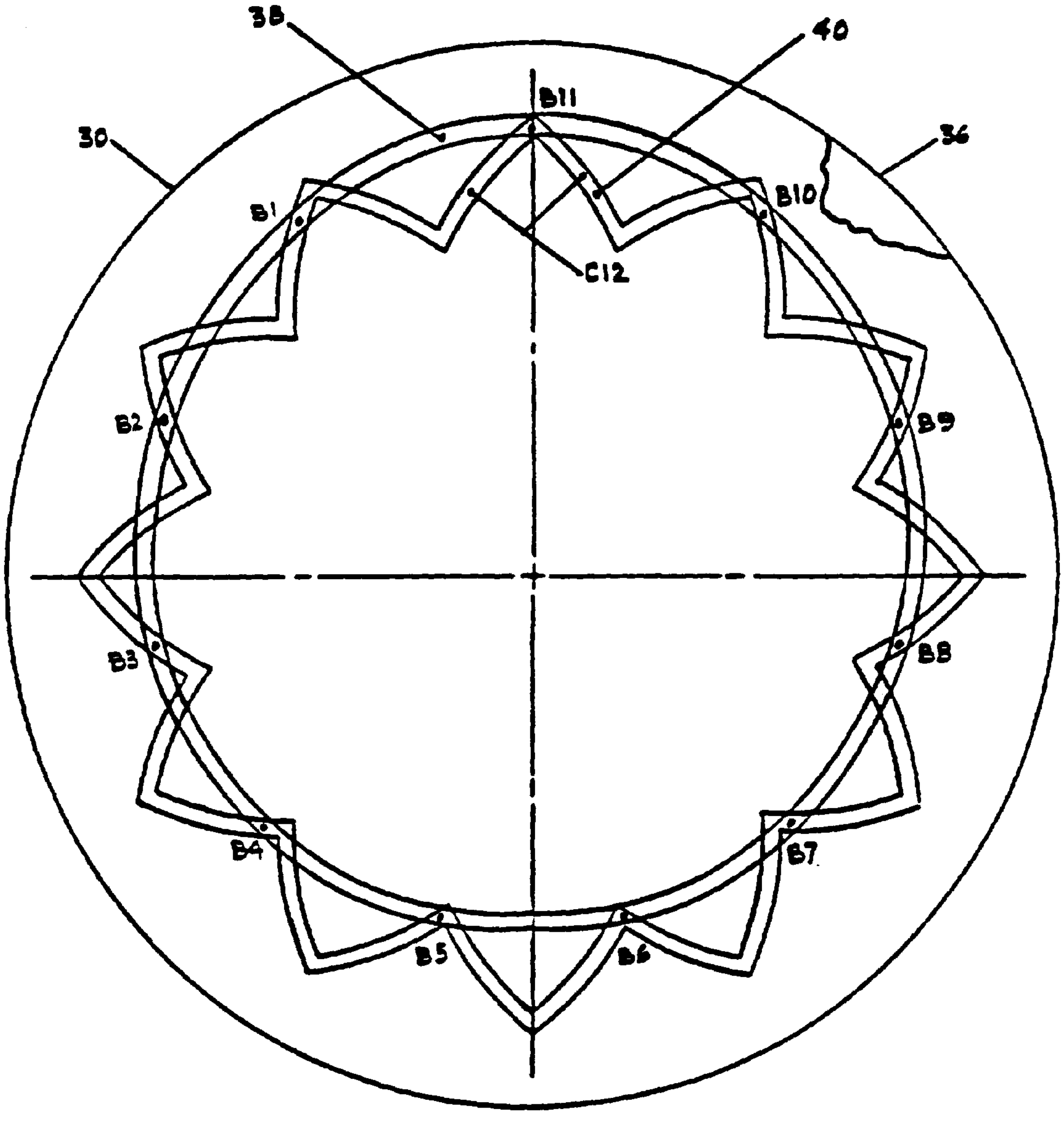


Figure 4

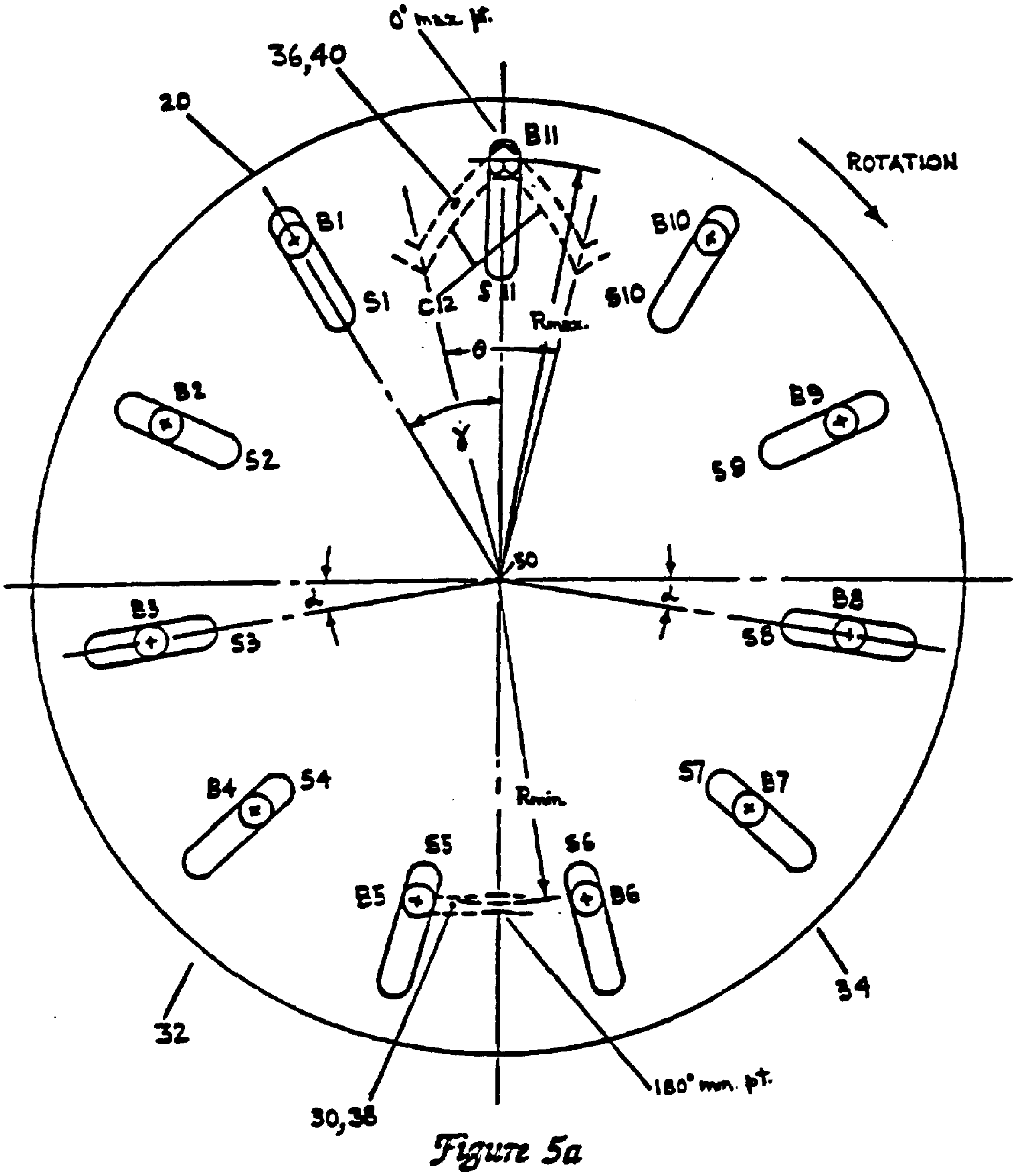
0° max. pt.
36,40
20
B11
ROTATION
B1
B10
S1
C12
S11
S10
Rmax.
θ
γ
B2
B9
S2
S9
50
α
α
B3
B8
S3
S8
S7
B7
B4
S4
Rmin.
S5
S6
B5
B6
32
34
180° min. pt.
30,38

Figure 5a

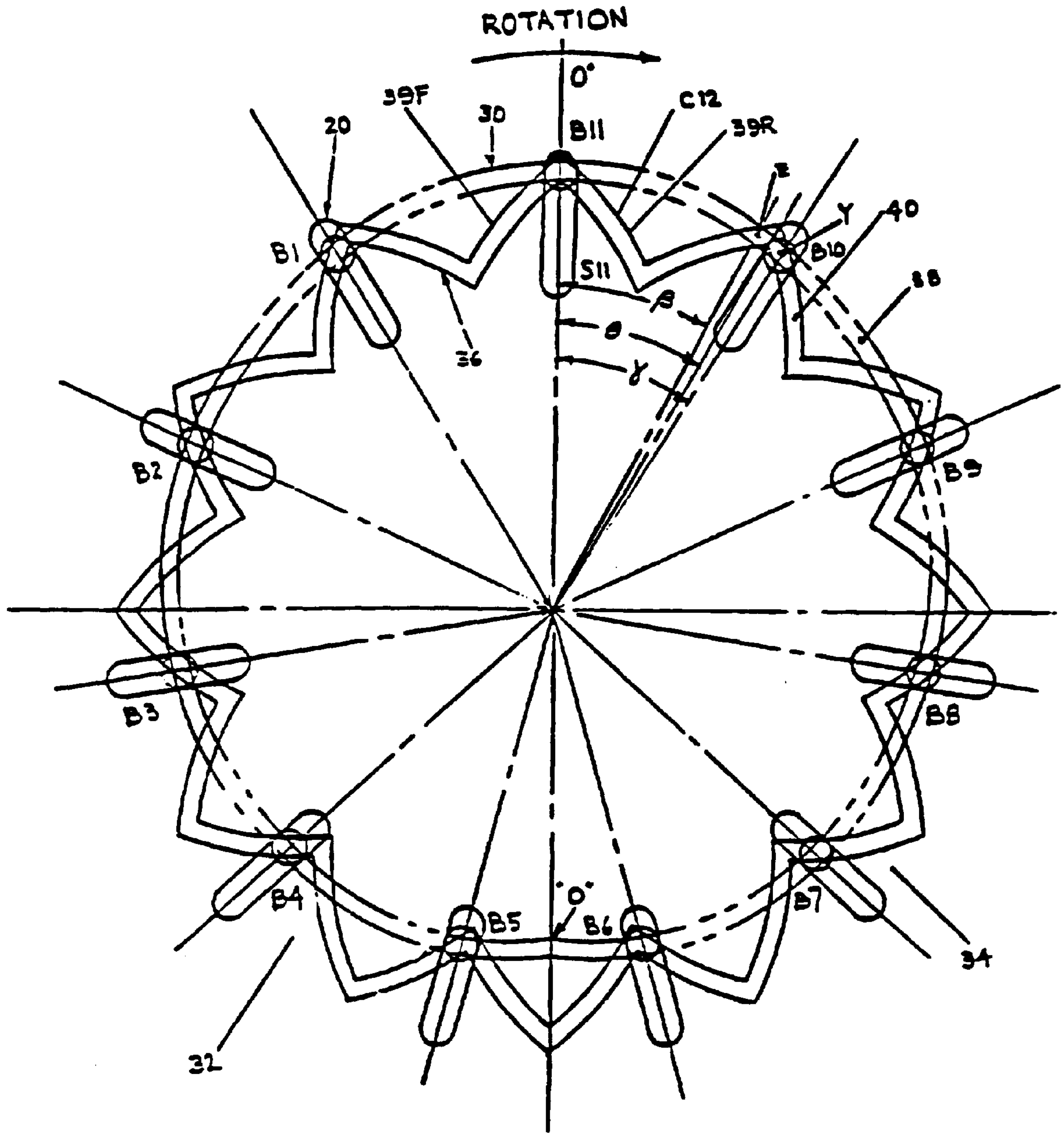
ROTATION
0°
B11
C12
39F
39R
30
20
B1
S11
B10
Y
40
38
36
β
θ
γ
B2
B9
B3
B8
B4
B5
"0"
B6
B7
34
32

Figure 5b

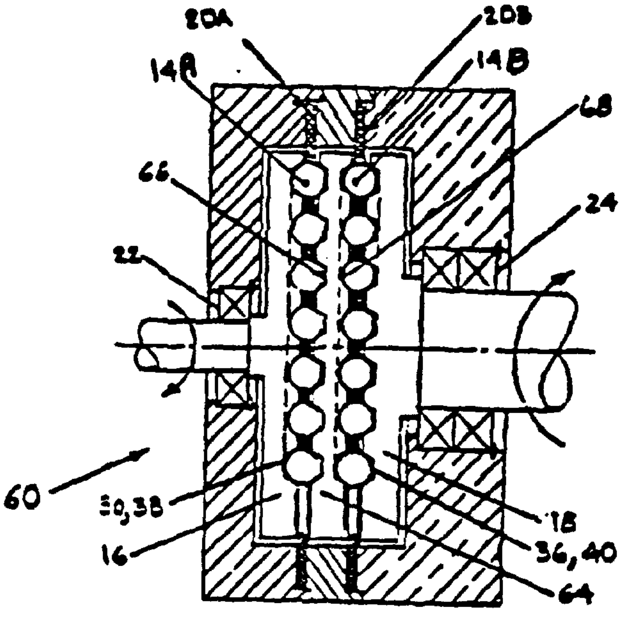


Figure 6a

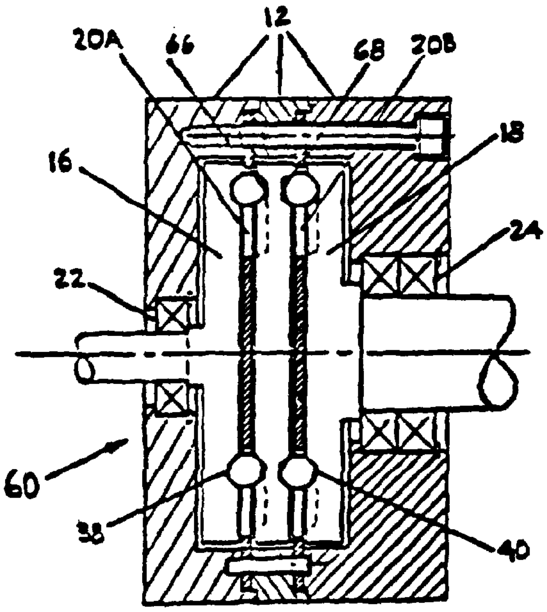


Figure 6b

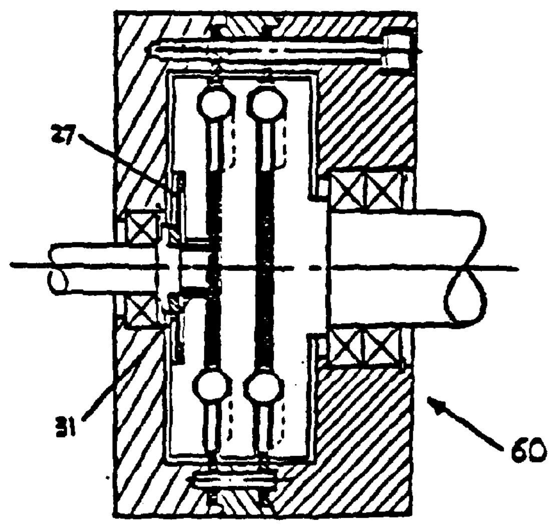


Figure 6c

Figure 6(d)

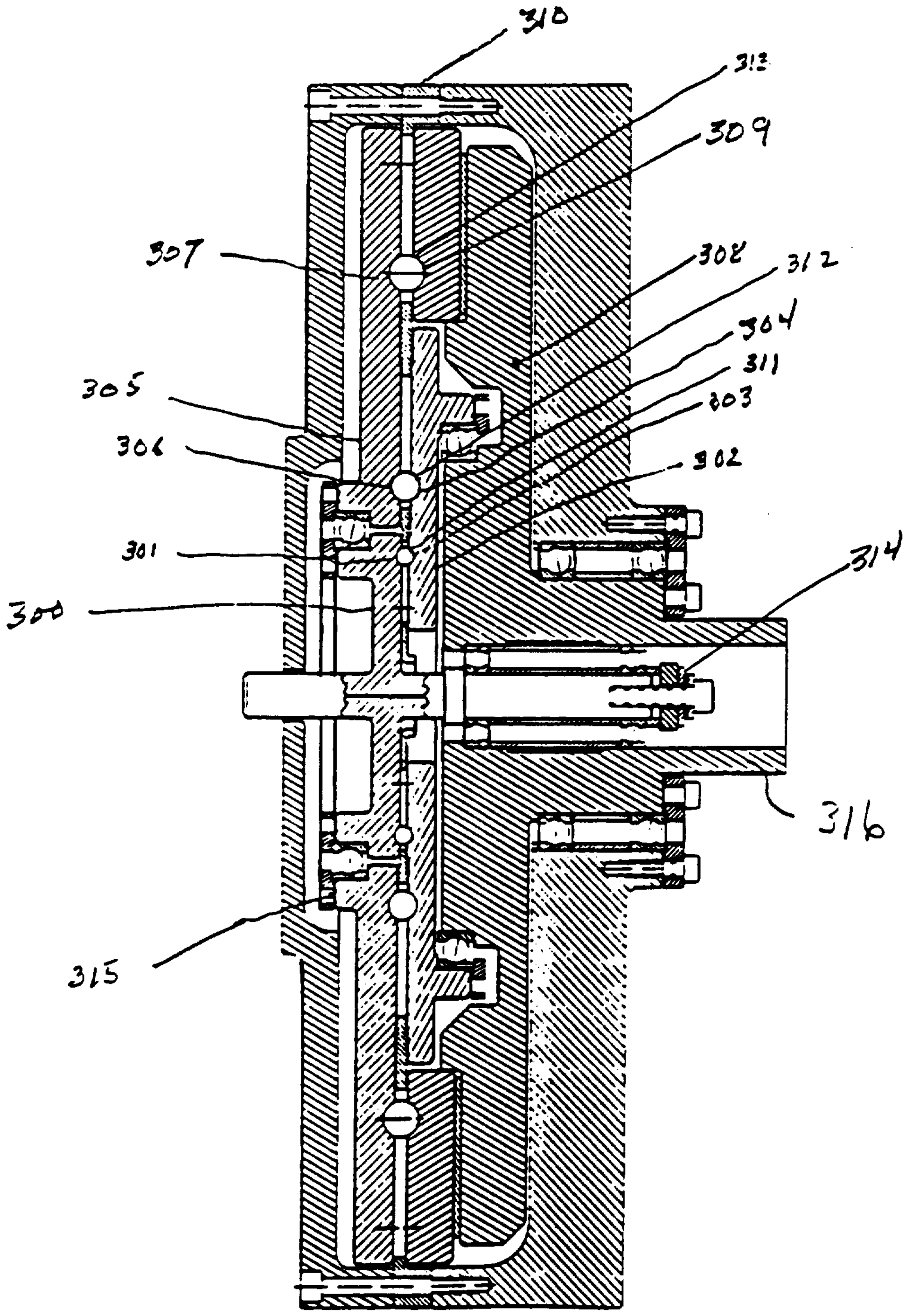
310
313
309
307
308
312
304
305
311
303
306
302
301
314
300
316
315

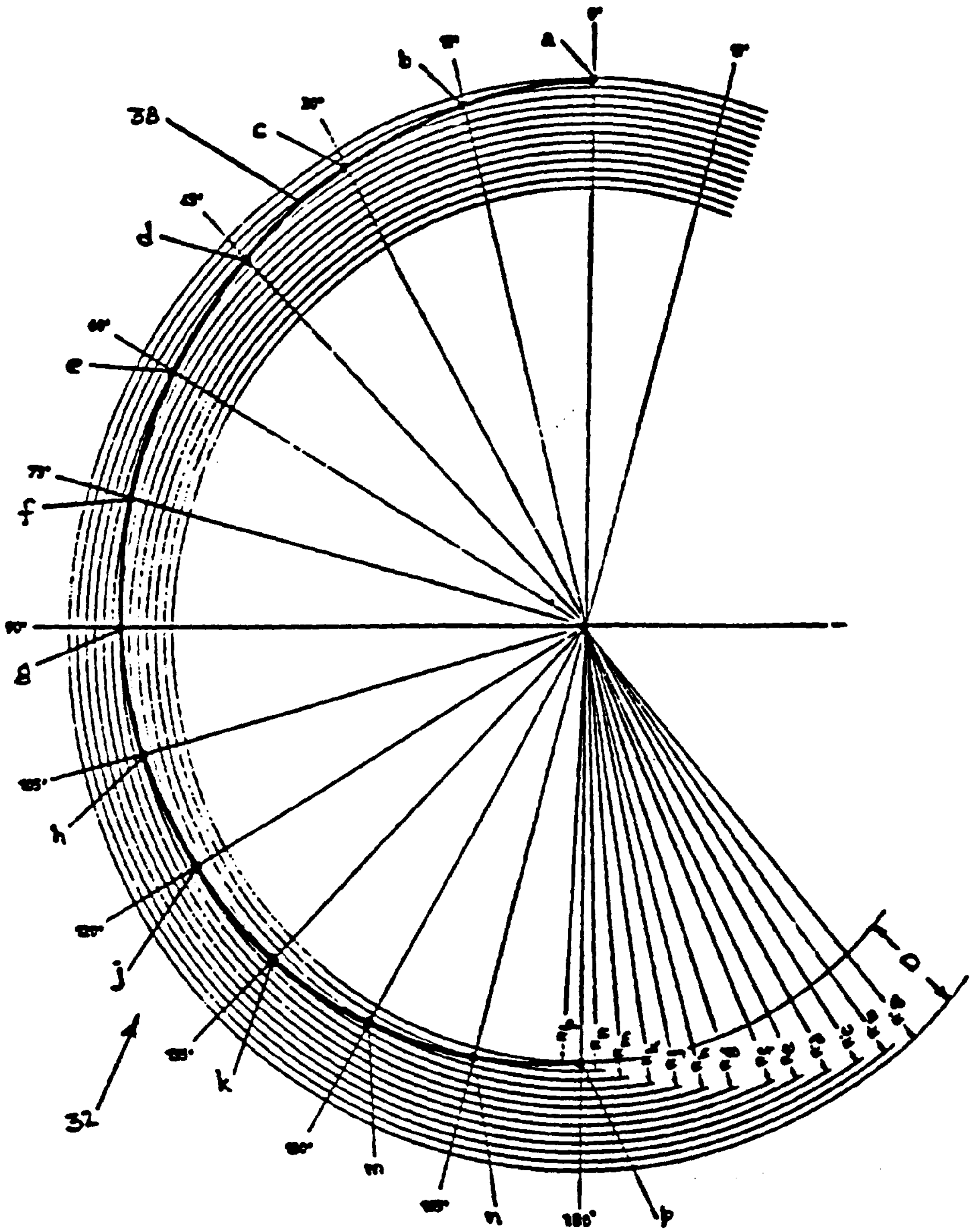


Figure 7a

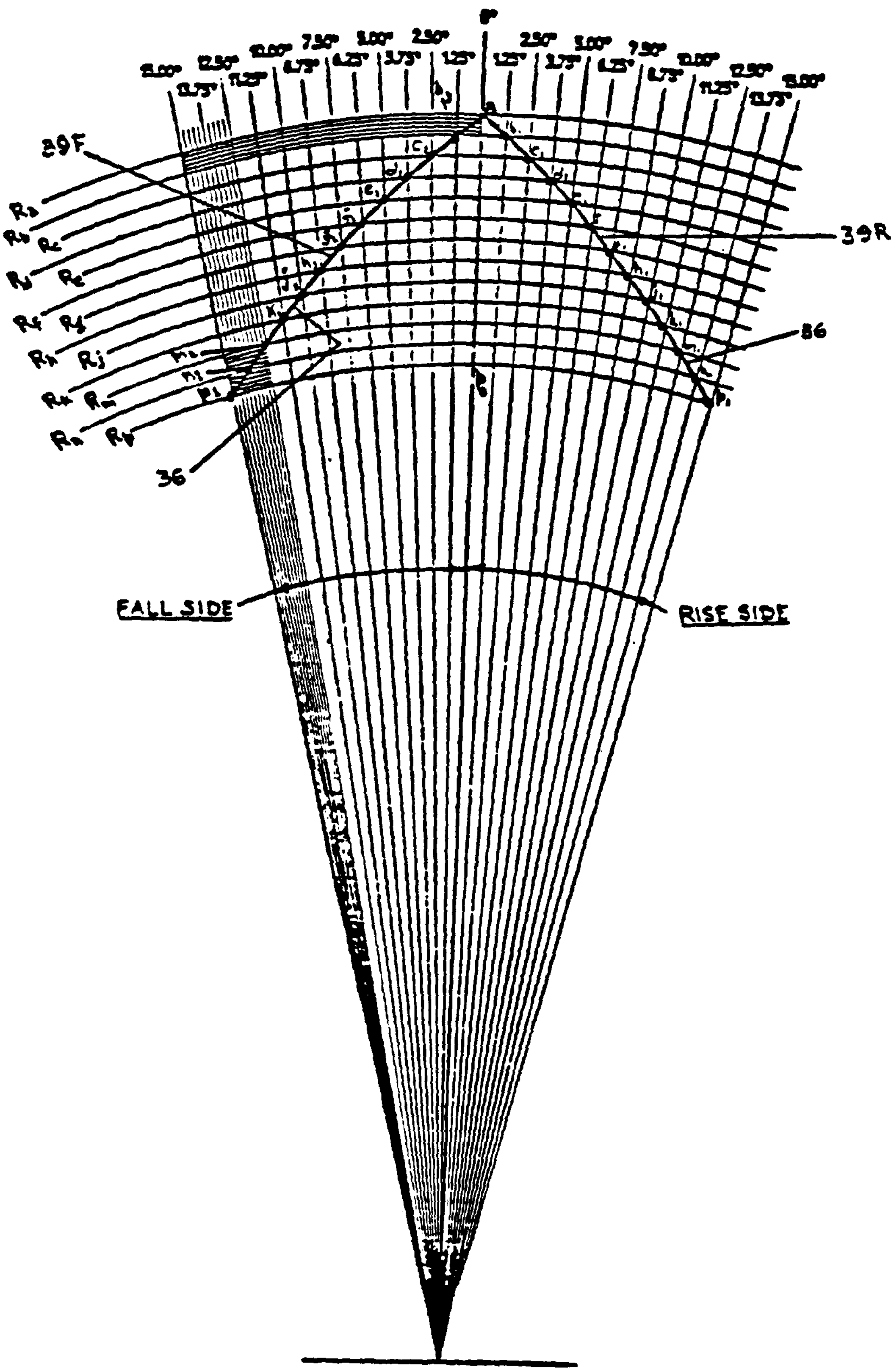
0°
15.00°
13.75°
12.50°
11.25°
10.00°
8.75°
7.50°
6.25°
5.00°
3.75°
2.50°
1.25°
39F
39R
86
36
FALL SIDE
RISE SIDE

*Figure 7b*

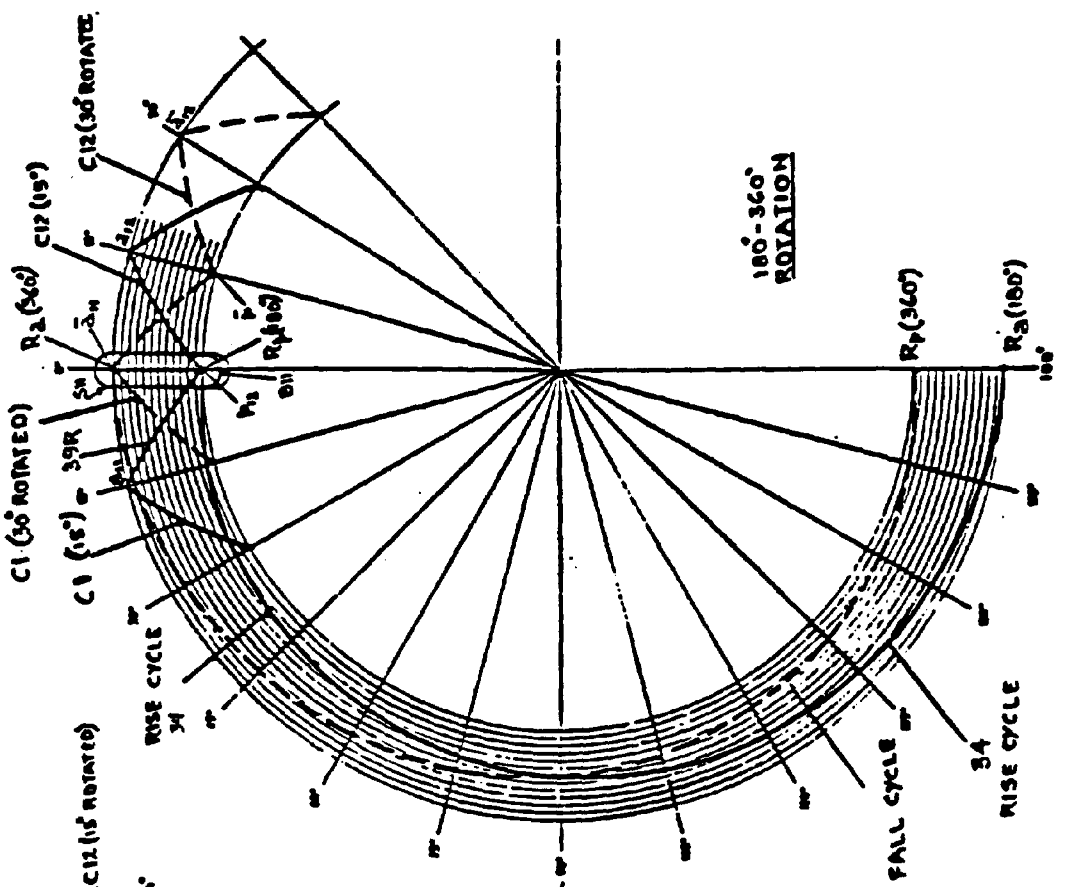


Figure 7d

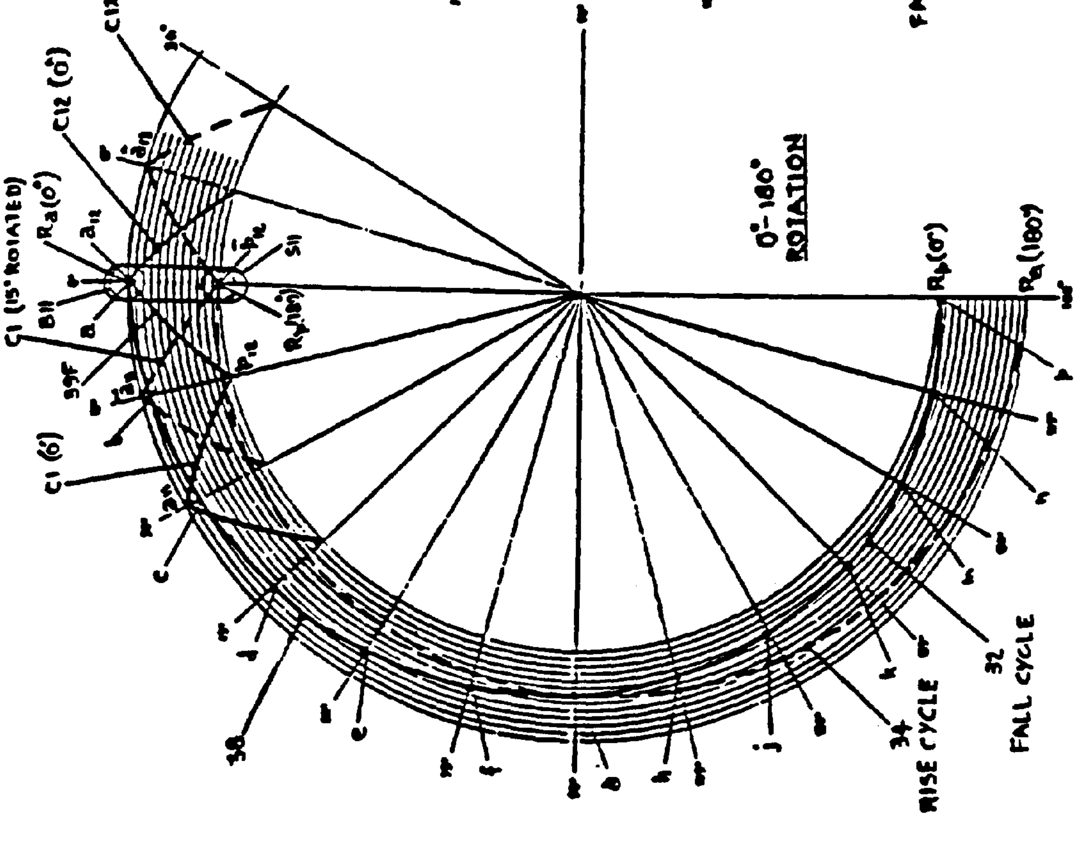


Figure 7c

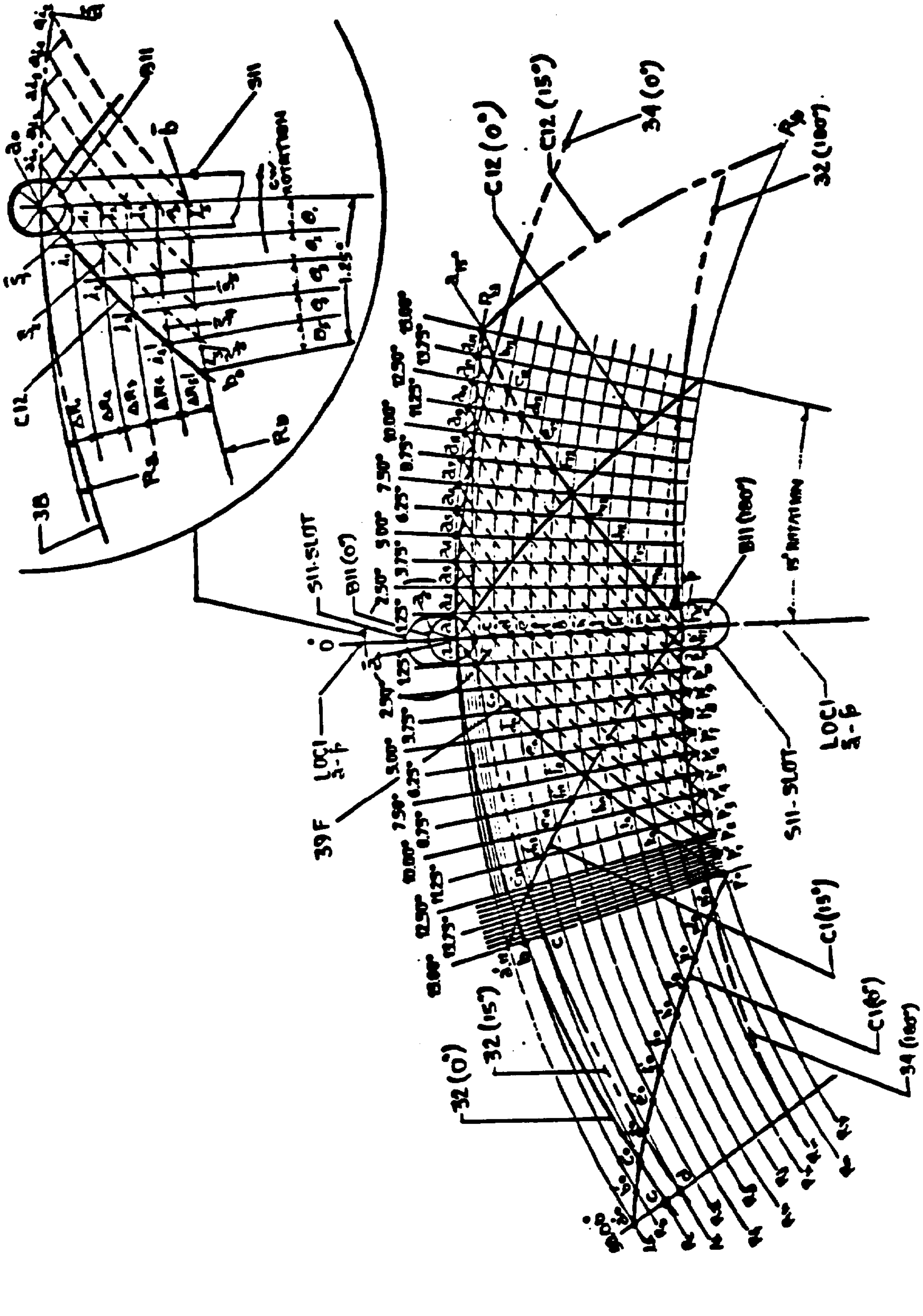

Figure 7e

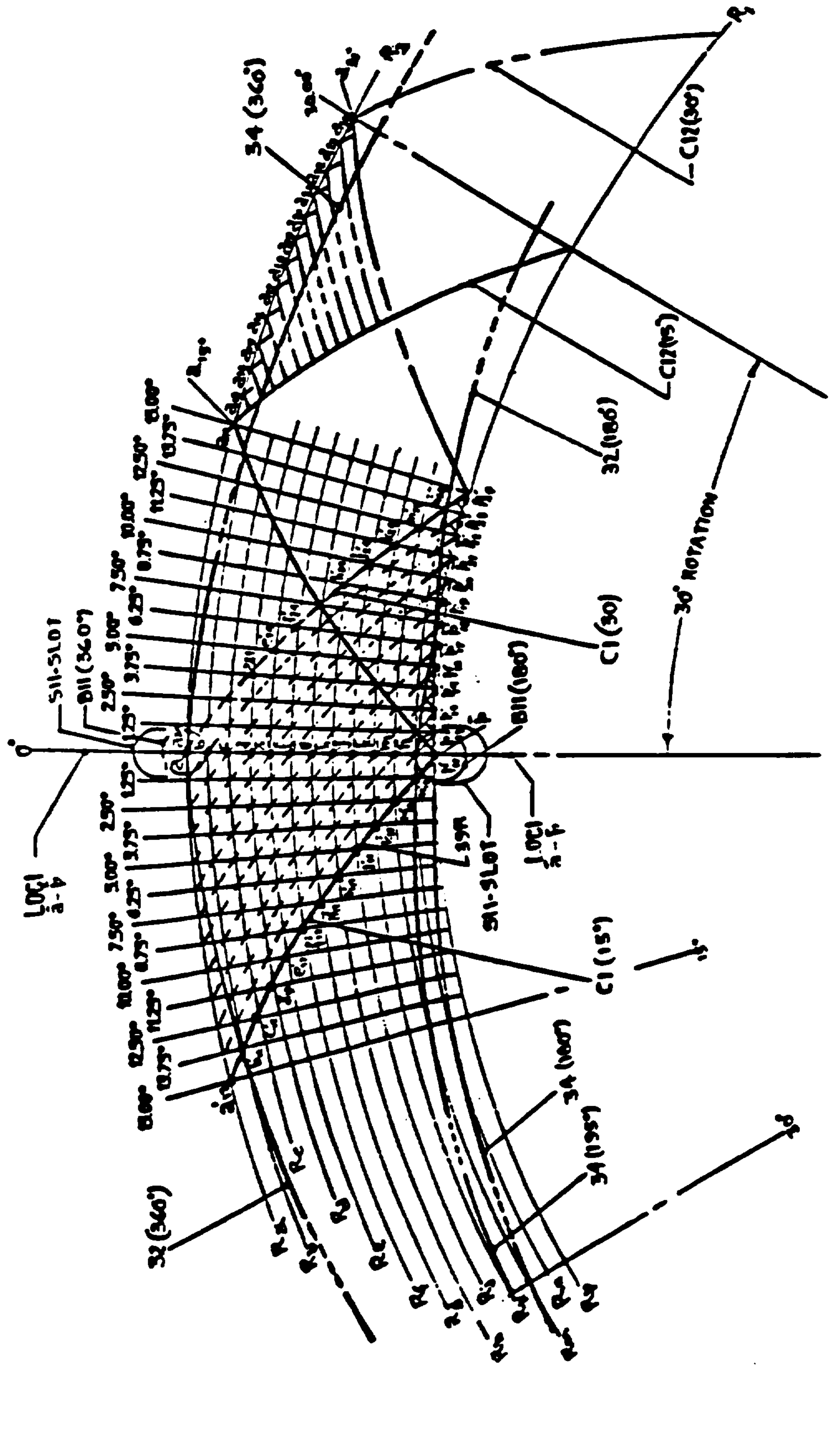
34 (360°)
C12 (30°)
C12 (15°)
32 (186)
36° ROTATION
C1 (30)
C1 (15°)
B11 (360°)
B11 (180°)
S11-SLOT
32 (360°)
34 (180°)
34 (195°)

Figure 7f

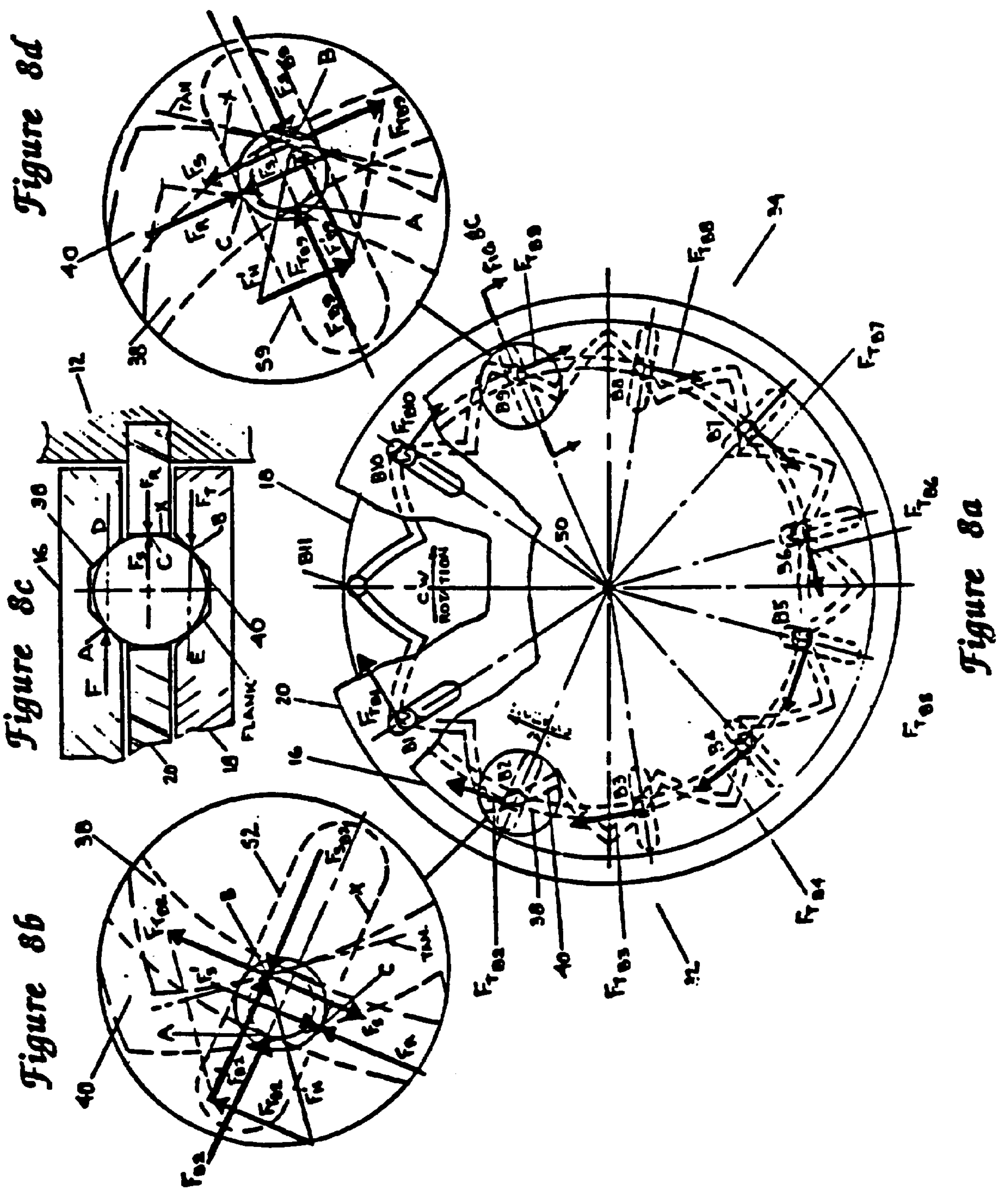
Figure 8a
Figure 8b
Figure 8c
Figure 8d
CW ROTATION
FLANK

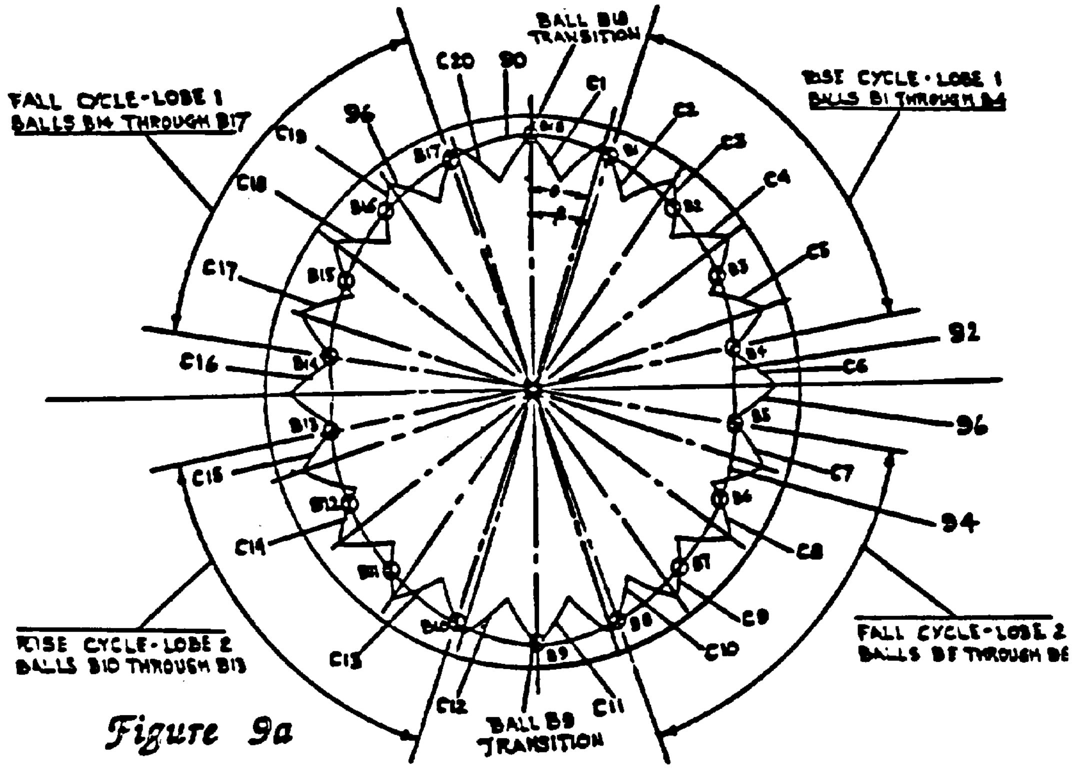


Figure 9a

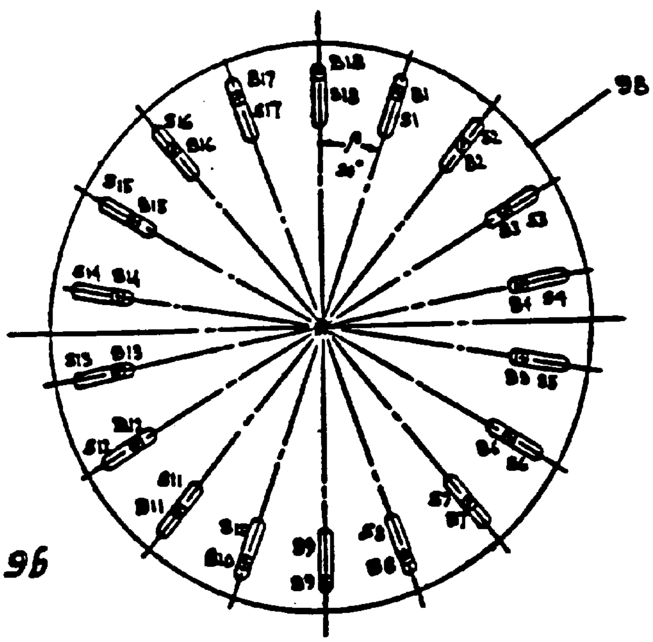


Figure 9b

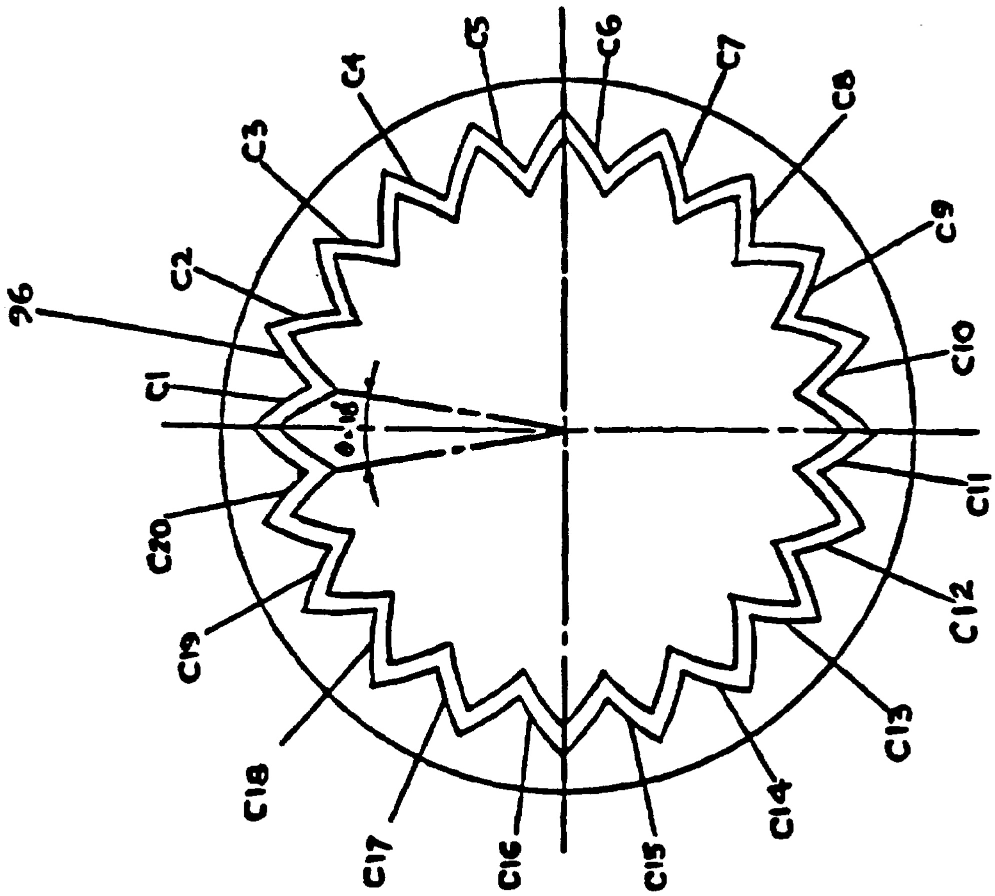


Figure 9d

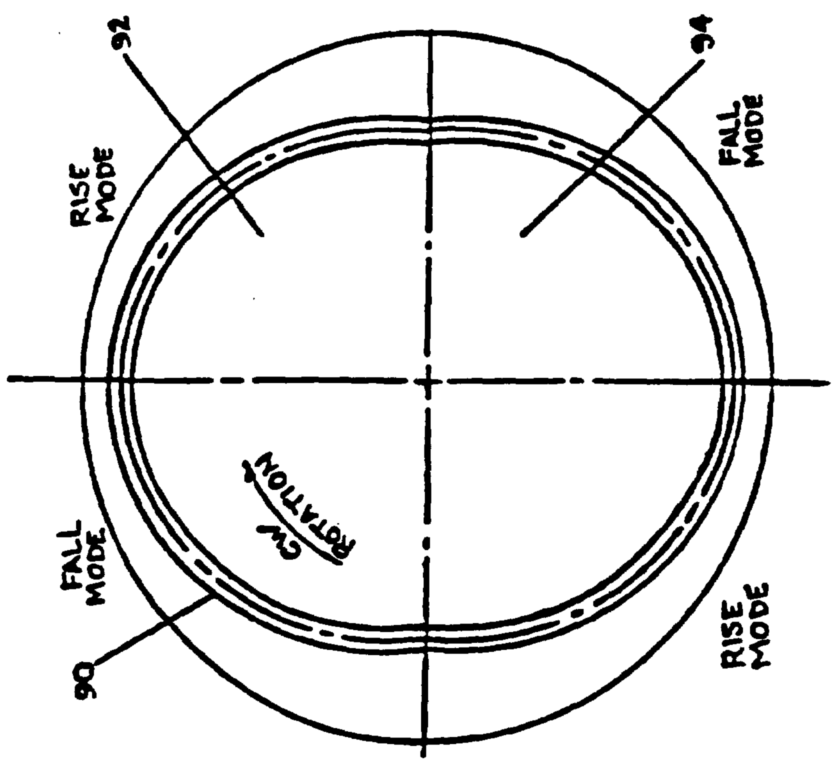


Figure 9c

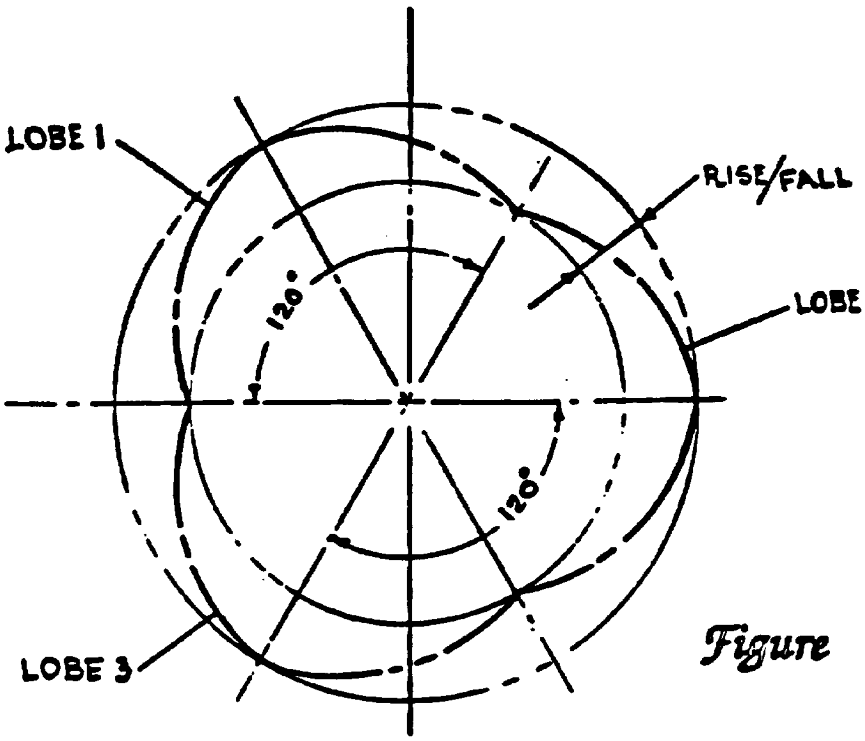


Figure 10a

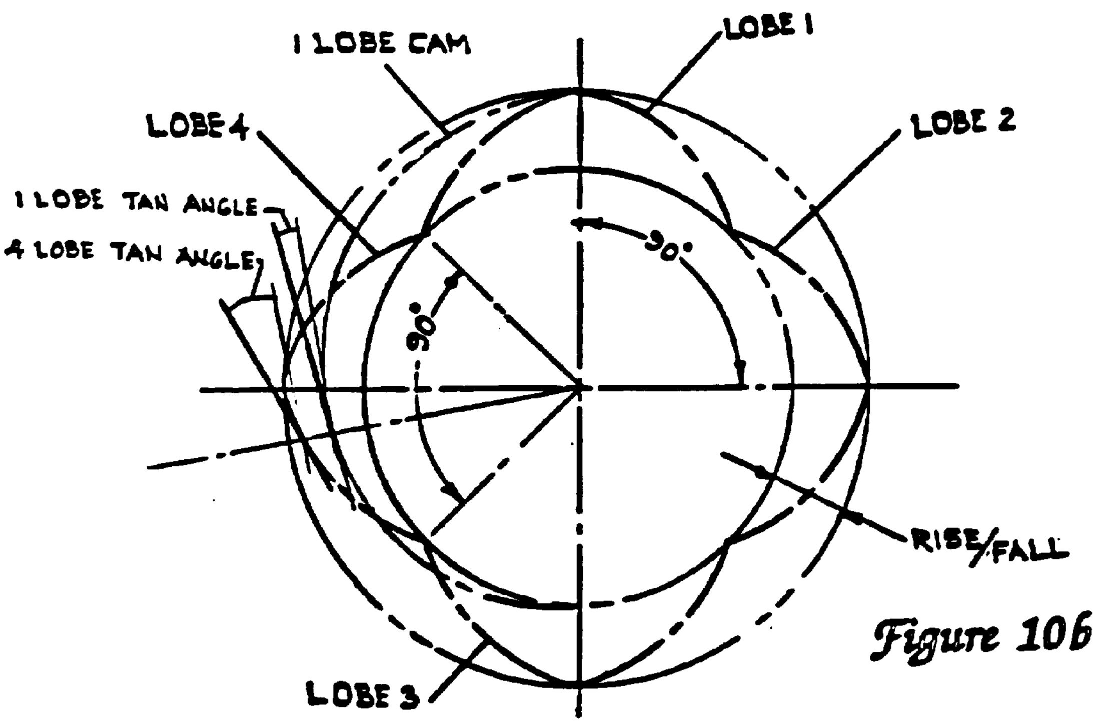


Figure 10b

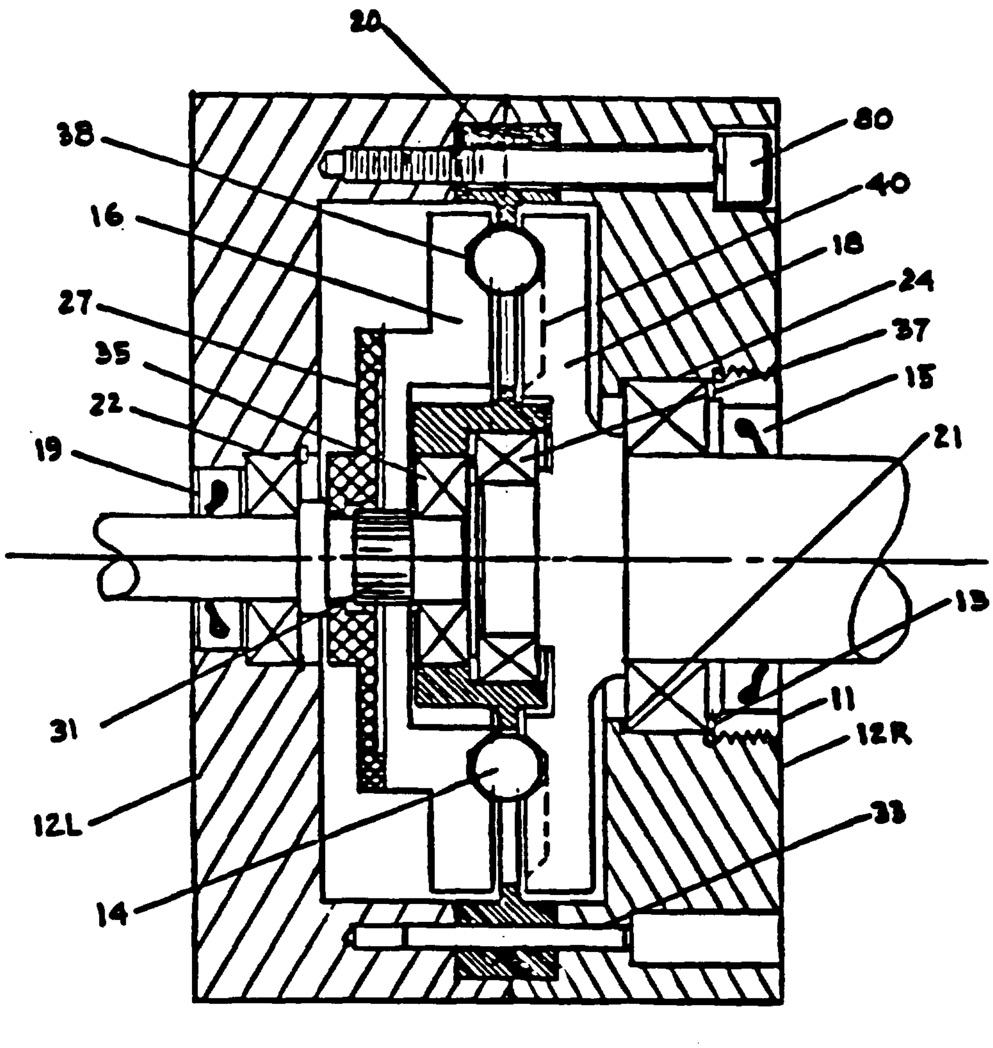


Figure 11

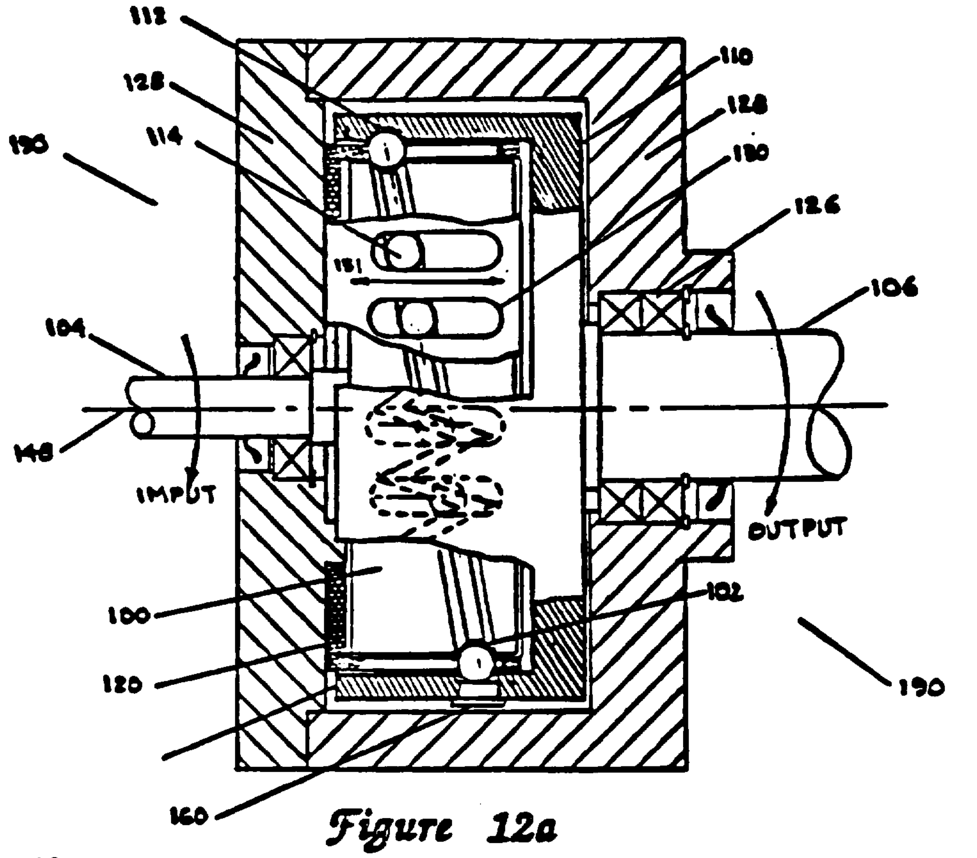


Figure 12a

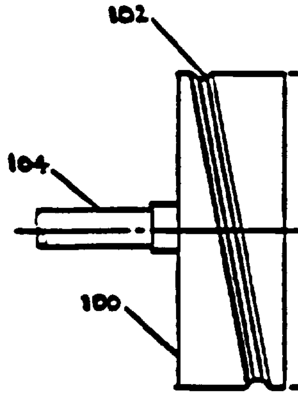


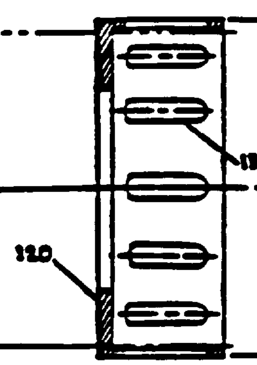


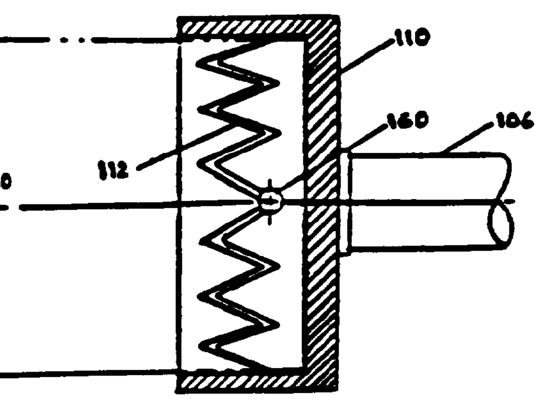


Figure 12b Figure 12c Figure 12d

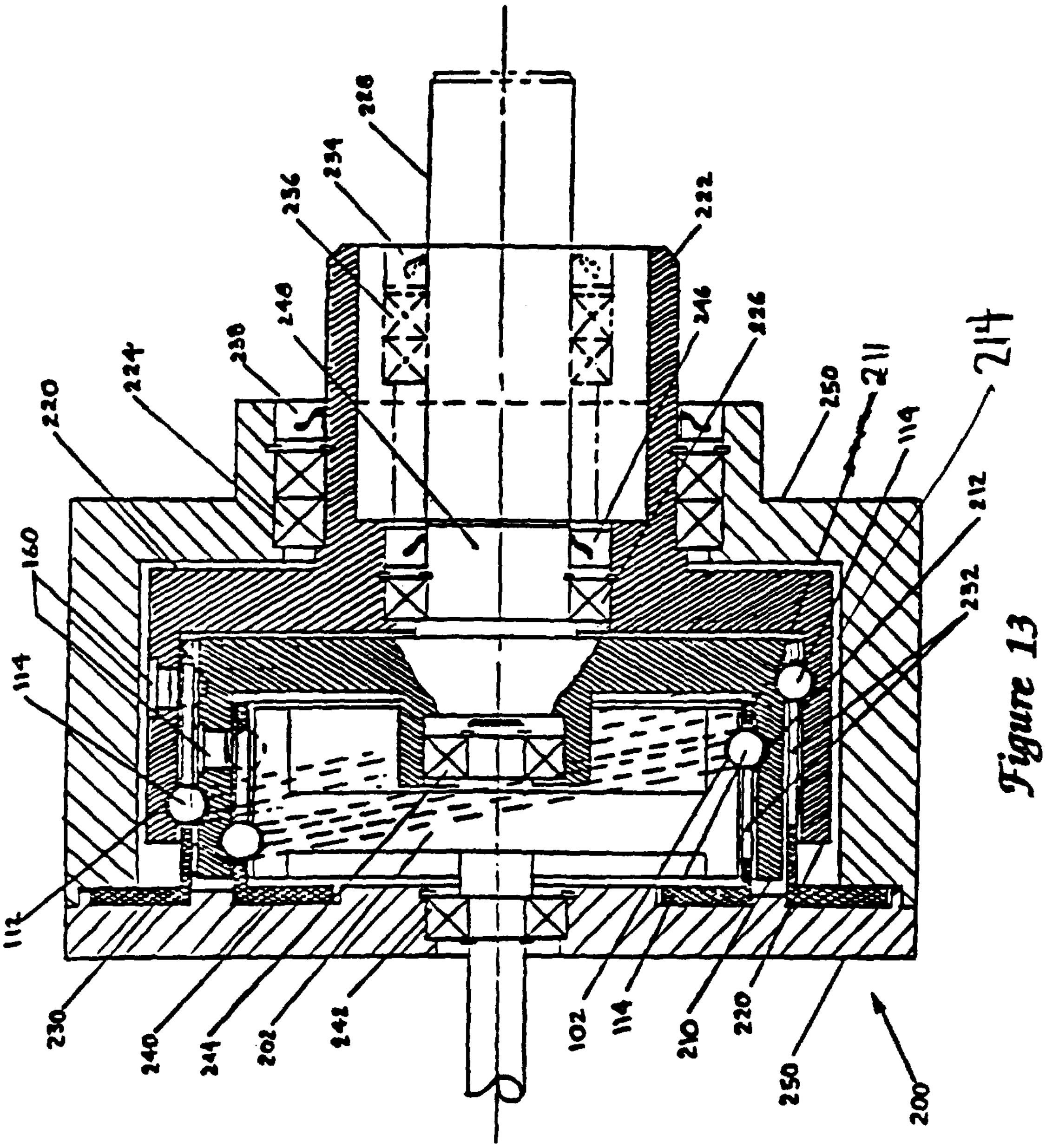
228
234
236
222
248
246
226
238
224
220
250
211
214
119
212
232
160
114
112
230
240
244
202
242
102
114
210
220
250
200

Figure 13

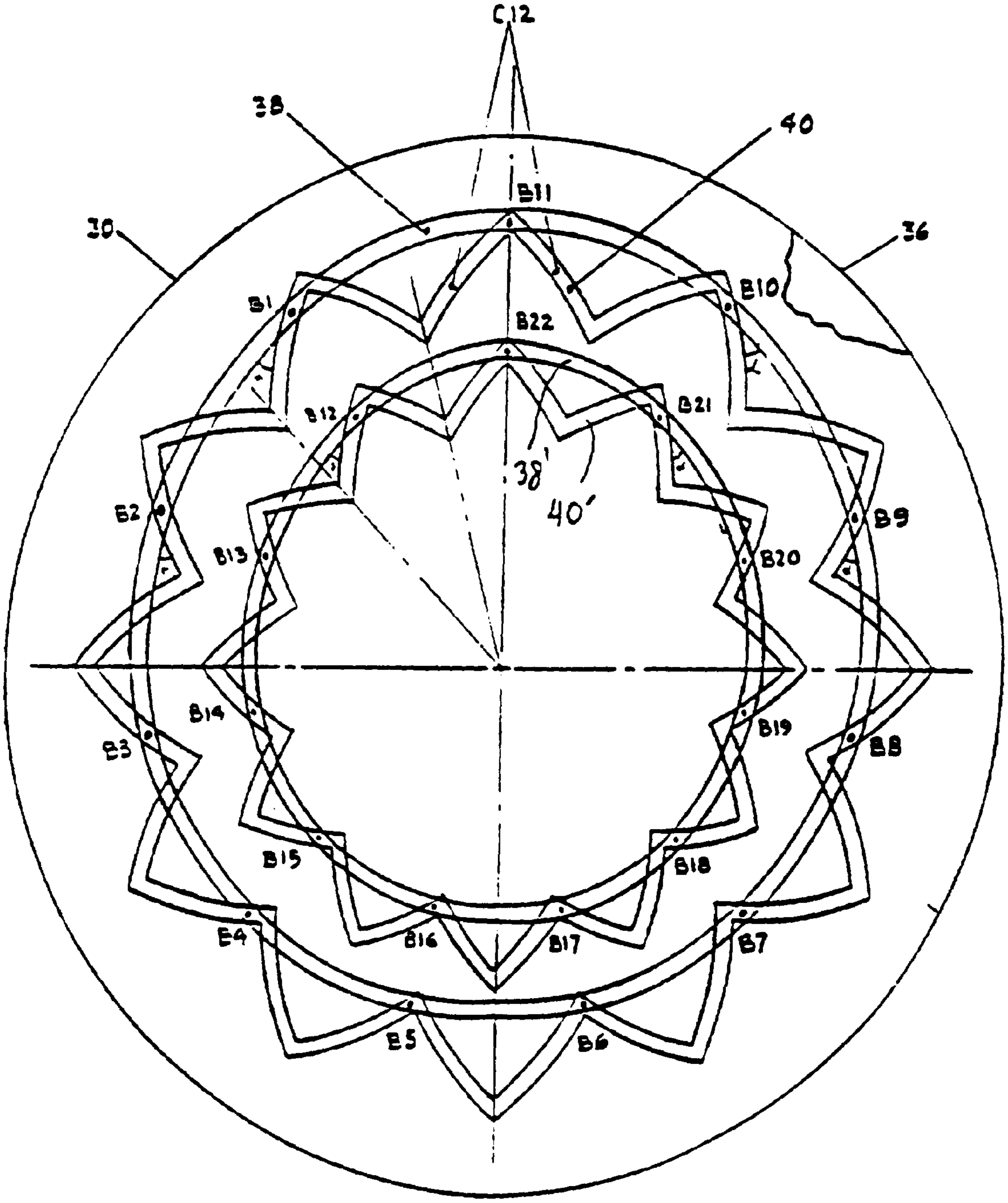
C12
38
40
30
36
B11
B1
B10
B22
B12
B21
38'
40'
B2
B9
B13
B20
B14
B19
B3
B8
B15
B18
B4
B16
B17
B7
B5
B6

Figure 14

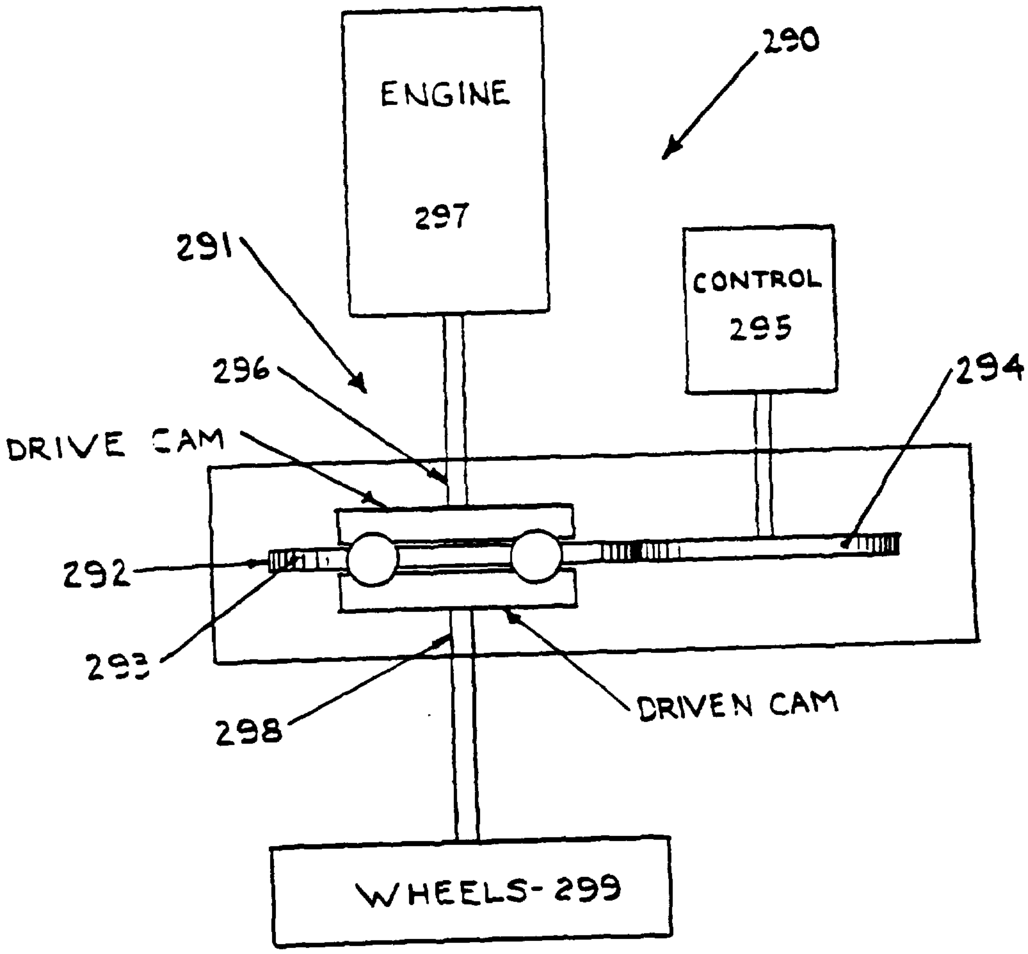
ENGINE
297
290
291
CONTROL
295
296
294
DRIVE CAM
292
293
298
DRIVEN CAM
WHEELS-299

*Figure 15*

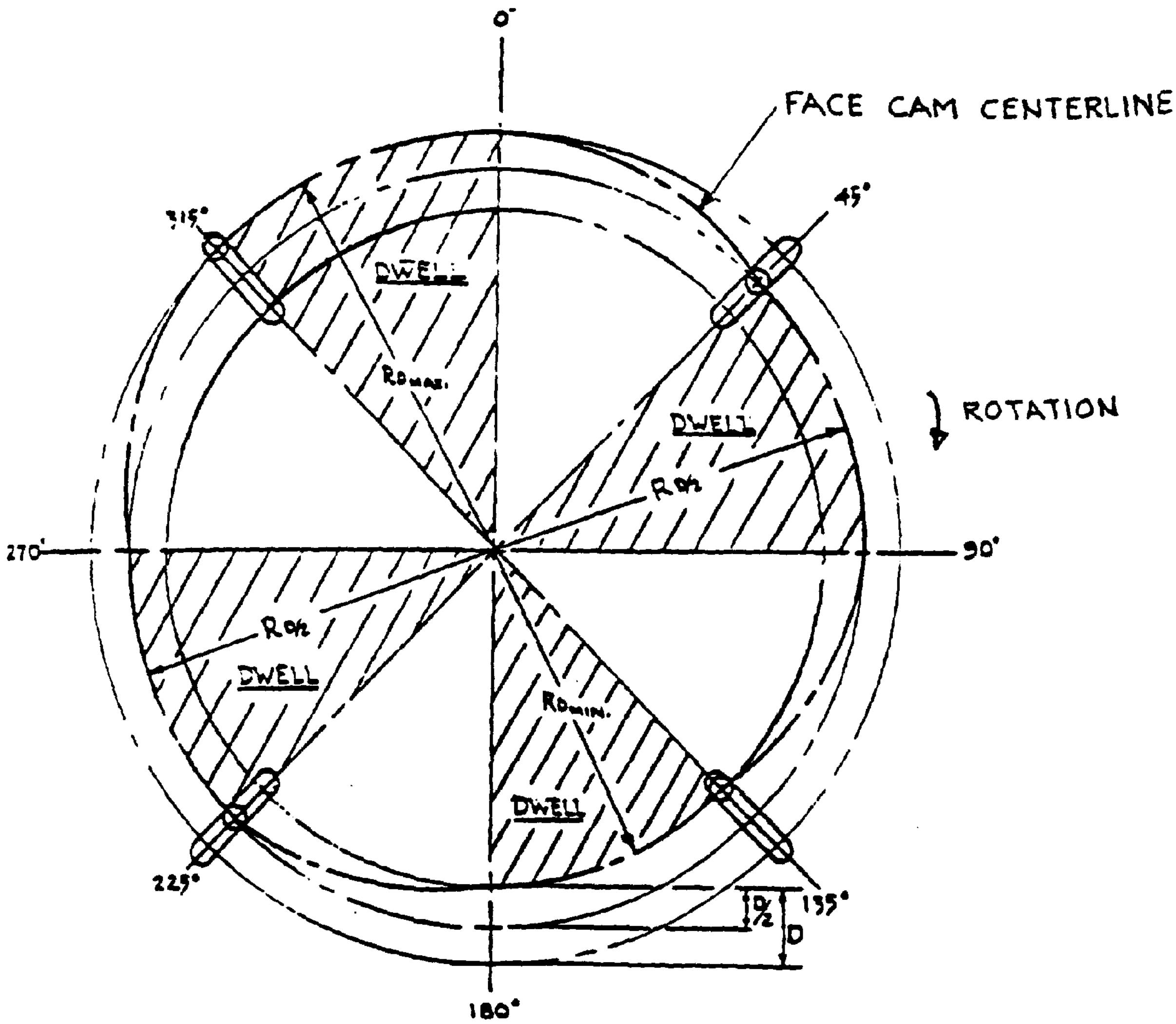
0°
FACE CAM CENTERLINE
45°
315°
DWELL
DWELL
ROTATION
R0max.
R0/2
270°
90°
R0/2
DWELL
R0min.
DWELL
225°
135°
D/2
D
180°

Figure 16